# EUROPEAN PATENT SPECIFICATION

(11) **EP 3 898 825 B1**
(45) Date of publication and mention of the grant of the patent: **01.04.2026**
(21) Application number: 19838967.8
(22) Date of filing: 20.12.2019
(51) Int. Cl.: C08L 21/00, C08K 9/00, C08K 9/10

(54) **CAPSULES COMPRISING VULCANISATION ACCELERANT AGENTS, THEIR PREPARATION AND USE IN THE VULCANISATION OF ELASTOMERIC COMPOUNDS FOR TYRES**
KAPSELN MIT VULKANISATIONSBESCHLEUNIGERN, IHRE HERSTELLUNG UND VERWENDUNG BEI DER VULKANISIERUNG VON ELASTOMERMISCHUNGEN FÜR REIFEN
CAPSULES COMPRENANT DES AGENTS ACCÉLÉRANT LA VULCANISATION, LEUR PRÉPARATION ET LEUR UTILISATION DANS LA VULCANISATION DE COMPOSÉS ÉLASTOMÈRES POUR PNEUS

(30) Priority: 21.12.2018 IT 201800020755
(43) Date of publication of application: 27.10.2021
(73) Proprietor: Pirelli Tyre S.p.A., 20126 Milano (IT)
(72) Inventor: SUSANNA, Antonio, 20126 Milano (IT); DONETTI, Raffaella, 20126 Milano (IT); HANEL, Thomas, 20126 Milano (IT); BRAZZO, Paolo, 20126 Milano (IT); BEVERINA, Luca, 20126 Milano (IT)
(74) Representative: PGA S.p.A.
(86) International application number: PCT/IB2019/061169
(87) International publication number: WO 2020/128990

(56) References cited:
- EP-A1- 1 742 993
- GB-A- 1 090 972
- JP-A- H1 017 706
- JP-A- S60 262 838
- US-A- 4 092 285
- US-A1- 2018 355 152

## Description

### FIELD OF THE INVENTION

The present invention relates to capsules comprising vulcanisation accelerant agents, to processes for their preparation, to their use in the vulcanisation of elastomeric compounds for tyres and to the vulcanised compounds thus obtained.

### PRIOR ART

In the tyre industry, sulphur vulcanisation is a process commonly used to improve the mechanical properties of natural rubber or unsaturated polymers. Vulcanisation influences the hardness, elasticity, hysteresis of the elastomeric material and, consequently, the properties and behaviour of the tyre that incorporates it.

Over the years, various additives have been proposed to improve the vulcanisation process such as vulcanisation activators, accelerants and retardants.

In general, with the use of one or more of these additives, it is desired to control the degree of cross-linking, possibly by decreasing the energy and time required to complete the reaction while avoiding compound burning phenomena.

Typically, the vulcanisation agents and additives are incorporated into the elastomers in one or more downstream mixing steps, in special mixers at controlled temperature, generally not exceeding 130 °C, preferably lower than 110 °C, to avoid early triggering of the cross-linking reactions.

Subsequently the compound incorporating all the agents and additives is subjected to vulcanisation in a mould, typically at pressures of between 14 and 30 bar and at temperatures between about 140 °C and 180 °C.

The agents and additives commonly used in vulcanisation, however, have more or less marked problems of dispersibility, due to their poor chemical affinity for the elastomeric mass, therefore requiring prolonged processes for the incorporation, possibly resulting, especially in the case of mixtures of different elastomeric polymers, in non-homogeneous distributions, with a greater concentration of additives in the more similar steps.

Due to the non-uniform dispersion of the vulcanisation agents and additives, the degree of cross-linking as well as the final properties of the vulcanised compounds can be somewhat uneven and negatively affect the performance of the tyres that incorporate them.

Document US6984450 dealt with the problem of poor solubility and inhomogeneous dispersion of sulphur and vulcanisation additives in the tyres and proposes their incorporation into capsules composed of lipophilic materials with high affinity for the elastomeric matrix, such as waxes, paraffins, polyethylenes, ethylene-vinyl acetate copolymers, polyvinyl alcohols and mixtures thereof. These non-cross-linked materials were subjected to melting and complete flaking at temperatures well below 140 °C, completely releasing the encapsulated product since the beginning of the vulcanisation. In the experimental part, some preparations of capsules melting at 125 °C were reported but not examples relating to their incorporation in elastomeric compounds, nor were any comments provided on the possible effects of this incorporation.

Document JP2002-226635 described the microencapsulation of vulcanising agents and accelerants in resins that could be degraded by irradiation, with a radical mechanism, thus releasing the encapsulated products. These resins were not cross-linked.

Examples of suitable resins were polystyrene, polyethylene, polypropylene, polyurethane, nylon, acrylic resin, methacrylic resin, ethylene-acrylic copolymer, ethylene-acetate copolymer, vinyl chloride resin, butadiene resin, polycarbonate, acrylonitrile butadiene styrene resin (ABS), styrene acrylonitrile resin (AS), polyacetal, polyester and the like. The document exemplified the preparation of polystyrene and polyvinyl alcohol capsules, containing sulphur, with a melting and flaking point of the capsule around 100 °C, and their incorporation into rubbers.

JPS60262838 relates to a microcapsule having a core comprising a vulcanisation accelerant and a wall formed by amino resins which are not cross-linked.

US2018/0355152 relates to a process for the production of tyres in which at least one component of these tyres is based on an elastomeric composition comprising microcapsules consisting of a polymeric wall, made of thermosetting resins such as phenol-formaldehyde resins or thermoplastic elastomers, and at least one active product such as a protecting agent, a plasticizing oil and a plasticizing resin.

JPH1017706 relates to a composition containing particles obtained by coating the surface of a vulcanising agent or a vulcanisation accelerant with a not cross-linked thermoplastic resin such as a methacrylic resin; this composition is able to control the vulcanisation speed of rubber products, such as tyres.

WO2005/108480 relates to an elastomeric composition comprising microencapsulated sulphur and free sulphur; this composition is useful in the preparation of rubber articles, such as for example tyres.

US4092285 relates to a composition comprising critical substances for rubbers or plastics encapsulated in a binder composition.

GB1090972 relates to a polymeric composition comprising at least one active ingredient microencapsulated with a polymeric or resinous material.

None of these documents describe or suggest a capsule coating whereof comprises at least one cross-linked polymer obtained by cross-linking at least one cross-linkable polymer selected from cellulose derivatives, starch and derivatives, chitosans, alginates, polyesters, phenol-formaldehyde resins, anhydrides derivatised NR, NBR or EPDM rubbers.

### SUMMARY OF THE INVENTION

The Applicant has dealt with the problem of the difficult and non-homogeneous incorporation of the vulcanisation additives, in particular of the accelerants, additives in the elastomeric compounds for tyres and, in this regard, has conducted encapsulation studies.

As part of this activity, the Applicant has found that by introducing vulcanisation accelerants in capsules coated with a cross-linked material, not only an excellent dispersion of the same in the elastomeric material is obtained, but above all a significant and surprising reduction in the vulcanisation times of the compound is observed.

This result was totally unexpected. In fact, considering the high thermal and mechanical stability of the present cross-linked capsules, an increase in the vulcanisation times was expected, with respect to the conventional addition of the accelerant directly in the compound, caused by the delay in the release of the accelerant from the capsules.

Without wishing to be bound to any particular interpretation, the Applicant hypothesised that the greater thermal and mechanical stability of the present cross-linked capsules seems to delay their opening resulting in a better dispersion of the same in the elastomeric material, made more malleable by prolonged processing and/or by the heat applied during mixing.

During this prolonged mixing step, even if the encapsulated accelerant were to undergo melting, it would still remain inside the capsule still intact.

Subsequently, in vulcanisation, as the temperature increases, the decomposition of the accelerant to give much more reactive species, for example 2-mercaptobenzothiazole (MBT) in the case of TBBS, seems to occur or complete even before the capsule is opened.

Upon exceeding the decomposition temperature of the cross-linked coating, the present capsules already well dispersed in the elastomeric mass seem to release particularly reactive accelerants directly into it - such as the mercaptobenzothiazole (MBT) - accelerants which, precisely because of their reactivity difficult to control and possible toxicity, preferably are not used as such in the preparation of compounds.

Advantageously with respect to the direct use of these accelerants, the encapsulation of their thermolabile precursors according to the invention has allowed accelerating the vulcanisation reaction.

Furthermore, under the encapsulation conditions of the invention, there were no compound burning phenomena.

A first aspect of the present invention therefore is a capsule comprising a coating and a core, wherein the coating comprises at least one cross-linked polymer obtained by cross-linking at least one cross-linkable polymer selected from cellulose derivatives, starch and derivatives, chitosans, alginates, polyesters, phenol-formaldehyde resins, anhydrides derivatised NR, NBR or EPDM rubbers with at least one cross-linking agent selected from among
the products having two or more epoxy groups, carboxylic groups, possibly activated as acyl halides or as esters, aldehyde groups, isocyanate groups, hydroxyl groups, halogens,
the products of formula (I)

   Q(OR)₄ (I)

   where Q is Sn, Si, Pb, Ge, Ti or, Zr, and R is C1-C4 alkyl,
the inorganic products of Zr, Ti and Sn,
the boron products such as boric acid and salts thereof,
the aluminium products of formula (II)

   Al(NO₃)₃, Al₂(SO₄)₃ or M Al(SO₄)₂ (II)
wherein M is potassium or sodium and wherein the core comprises at least one thermolabile vulcanisation accelerant (A) having a melting point lower than 140°C. A further aspect of the present invention is an emulsion process for the preparation of the capsules according to the invention, which comprises
   - providing a solution of at least one cross-linkable polymer, selected from cellulose derivatives, starch and derivatives, chitosans, alginates, polyesters, phenol-formaldehyde resins, anhydrides derivatised NR, NBR or EPDM rubbers, at least one thermolabile vulcanisation accelerant (A) having a melting point lower than 140°C and, optionally, at least one cross-linking agent, selected from among
the products having two or more epoxy groups, carboxylic groups, possibly activated as acyl halides or as esters, aldehyde groups, isocyanate groups, hydroxyl groups, halogens,
the products of formula (I)

   Q(OR)₄ (I)
where Q is Sn, Si, Pb, Ge, Ti or, Zr, and R is C1-C4 alkyl,
the inorganic products of Zr, Ti and Sn,
the boron products such as boric acid and salts thereof,
the aluminium products of formula (II)

   Al(NO₃)₃, Al₂(SO₄)₃ or M Al(SO₄)₂ (II)
wherein M is potassium or sodium, in at least one suitable organic solvent immiscible with water (organic phase), wherein said organic solvent immiscible with water is selected from among chlorinated solvents, aromatic and aromatic halides solvents, aliphatic hydrocarbons, esters, ethers and mixtures thereof,
   - providing an aqueous phase,
   - providing at least one non-ionic surfactant, possibly dissolved in said aqueous phase,
   - mixing together said organic phase, said aqueous phase and said at least one surfactant up to providing an emulsion,
   - adding to the emulsion, if not already present, the at least one cross-linking agent,
   - allowing the emulsion to react, preferably under stirring, in order to produce non-cross-linked capsules,
   - isolating the non-cross-linked capsules from the emulsion, and
   - subjecting the capsules to cross-linking, thus obtaining the cross-linked capsules.

A further aspect of the present invention is a capsule obtainable according to the process of the invention described above.

A further aspect of the invention is an elastomeric composition for tyres comprising at least
0.1 to 20 phr of at least one thermolabile vulcanisation accelerant (A) having a melting point lower than 140°C encapsulated in a capsule according to the invention, 100 phr of at least one diene elastomeric polymer (B),
0 to 120 phr of at least one reinforcing filler (C), and
0.1 to 15 phr of at least one vulcanising agent (D).

A further aspect of the present invention is a vulcanisable elastomeric compound for tyres obtained by mixing and possibly heating the components of the elastomeric composition for tyres of the invention, or a vulcanised elastomeric compound obtained by vulcanisation thereof.

A further aspect of the present invention is a process for the preparation of a vulcanisable elastomeric compound for tyres of the invention, said process comprising one or more mixing steps in at least one suitable mixer of at least one thermolabile vulcanisation accelerant (A) having a melting point lower than 140°C encapsulated in a capsule according to the invention,
- at least one diene elastomeric polymer (B),
- optionally at least one reinforcing filler (C),
- at least one vulcanising agent (D).

A further aspect of the present invention is a component of a tyre comprising the vulcanisable compound of the invention or the vulcanised compound obtained by vulcanisation thereof. A further aspect of the present invention is a tyre for vehicle wheels comprising at least one component of a tyre of the invention.

A further aspect of the present invention is the use of the capsule according to the invention as accelerant of the vulcanisation of elastomeric compounds for tyres.

### DEFINITIONS

For the purposes of the present description and of the following claims, the term "phr" (parts per hundreds of rubber) means the parts by weight of a given component of the elastomeric composition by 100 parts by weight of the diene elastomeric polymer.

Unless otherwise indicated, all the percentages are expressed as percentages by weight.

In the present description, the term "elastomeric polymer" or "rubber" or "elastomer" means a natural or synthetic polymer which, after vulcanisation, at room temperature can be stretched repeatedly to at least twice its original length and which, after removal of the tensile load substantially immediately returns with force to approximately its original length (according to the definitions of the ASTM D1566-11 Standard terminology relating to Rubber).

The term "elastomeric composition for tyres" means a composition comprising at least one diene elastomeric polymer and one or more additives, which by mixing and possible heating provides an elastomeric compound suitable for use in tyre components.

The components of the elastomeric composition are not generally introduced simultaneously into the mixer but typically added in sequence. In particular, the vulcanisation additives, such as the vulcanising agent and possibly the accelerant and retardant agents, are usually added in a downstream step with respect to the incorporation and processing of all the other components.

In the final vulcanisable elastomeric compound, the individual components of the elastomeric composition may be altered or no longer individually traceable as modified, completely or in part, due to the interaction with the other components, of heat and/or mechanical processing. The term "elastomeric composition" herein is meant to include the set of all the components that are added in the preparation of the elastomeric compound, regardless of whether they are all actually present simultaneously, are introduced sequentially or are then traceable in the elastomeric compound or in the final tyre.

The term "elastomeric compound" refers to the compound obtainable by mixing and possibly heating at least one elastomeric polymer with at least one of the additives commonly used in the preparation of tyre compounds.

The term "non-vulcanisable elastomeric compound" indicates a compound obtainable by mixing and possibly heating at least one elastomeric polymer with at least one of the additives commonly used in the preparation of tyre compounds, with the exception of vulcanising agents.

The term "vulcanisable elastomeric compound" indicates an elastomeric compound ready for vulcanisation, obtainable by incorporation into a non-vulcanisable elastomeric compound of all the additives, including those of vulcanisation.

The term "vulcanised elastomeric compound" means the material obtainable by vulcanisation of a vulcanisable elastomeric compound.

The term green is generally used to indicate a material, a compound, a composition, a component or a tyre not yet vulcanised.

The term "cross-linked polymer" indicates a polymer in which adjacent linear molecular chains are joined in different positions by covalent bonds to give a network structure.

The term "reinforcing filler" refers to a reinforcing material (including white fillers) typically used in the sector to improve the mechanical properties of tyre rubbers, preferably selected from among carbon black, conventional silica, such as silica from sand precipitated with strong acids, preferably amorphous, diatomaceous earth, calcium carbonate, titanium dioxide, talc, alumina, aluminosilicates, kaolin, silicate fibres and mixtures thereof.

The term "white filler" refers to a conventional reinforcing material used in the sector selected from among conventional silica and silicates, such as sepiolite, paligorskite also known as attapulgite, montmorillonite, alloisite and the like, possibly modified by acid treatment and/or derivatised. Typically, white fillers have surface hydroxyl groups.

The term "vulcanising agent" indicates a product capable of transforming natural or synthetic rubber into elastic and resistant material due to the formation of a three-dimensional network of inter- and intra-molecular bonds.

The term "vulcanisation accelerant" indicates a product capable of decreasing the duration of the vulcanisation process and/or the operating temperature, such as TBBS.

The term "vulcanisation activating agent" indicates a product capable of further facilitating the vulcanisation, making it happen in shorter times and possibly at lower temperatures. An example of activating agent is the stearic acid-zinc oxide system. The term "vulcanisation retardant", also referred to as "early cross-linking inhibitor", indicates a product capable of delaying the onset of the vulcanisation reaction and/or suppressing undesired secondary reactions, for example N-(cyclohexylthio)phthalimide (CTP).

The term "vulcanisation package" is meant to indicate the vulcanising agent and one or more vulcanisation additives selected from among vulcanisation activating agents, accelerants and retardants.

The term "mixing step (1)" indicates the step of the production process of the elastomeric compound in which one or more additives can be incorporated by mixing and possibly heating, except for the vulcanising agent which is fed in step (2). The mixing step (1) is also referred to as "non-productive step".

The term "mixing step (2)" indicates the next step of the production process of the elastomeric compound in which the vulcanising agent (D) and, possibly, the other additives of the vulcanisation package are introduced into the elastomeric compound obtained from step (1), and mixed in the material, at controlled temperature, generally at a compound temperature lower than 120 °C, so as to provide the vulcanisable elastomeric compound. The mixing step (2) is also referred to as "productive step".

The term "discontinuous or batch mixer" indicates a mixing device adapted to be periodically fed with the elastomeric composition components in predefined amounts (batches) and mix them for a predetermined time so as to obtain the elastomeric composition. At the end of mixing, the resulting elastomeric composition is fully unloaded from the mixing device in a single solution.

Typically, a batch mixer comprises a pair of tangential or interpenetrating rotors housed in a mixing chamber and rotating in opposite direction, so as to mix the components introduced into the mixing chamber through its top.

To this end, the batch mixer may be provided with a pneumatic or hydraulic cylinder positioned at the top of the mixing chamber and a piston that moves both upwards, to open the mixing chamber, thereby allowing the introduction of ingredients of the composition by specific loading hoppers, and downwards, so as to exert pressure on the material being worked in the mixing chamber and located above the pair of rotors.

A pneumatic or hydraulic system positioned on the bottom of the mixing chamber enables the unloading of the elastomeric composition at the end of the mixing cycle through the opening of a dedicated inlet.

Specific examples of batch mixers that can be advantageously used according to the present invention are of the closed (Banbury^{®}, Intermix^{®}, Tandem Mixer HF) or open (open mill or Z-blade) type.

In the present description, the term "continuous mixer" indicates a mixing device suitable for receiving the ingredients of an elastomeric composition as a continuous feeding, mixing and/or reworking them in order to produce and unload an elastomeric composition in a continuous stream (except for possible stops of the mixing device due to maintenance, or elastomeric composition recipe change) in contrast to the periodic loading/unloading of the batch mixing device.

The continuous mixer is able to substantially mix the ingredients of an elastomeric composition, especially under cold-feeding/dosing conditions, and to chew the elastomeric material, thereby raising the temperature thereof in order to make it workable and plastic to facilitate the incorporation and/or distribution of the ingredients within the polymeric matrix. The continuous mixer is therefore mainly provided with mixing portions able to impart a high shear stress to the composition, and with any redistribution portions. The continuous mixer is further provided with transport portions capable of carrying the composition being worked from one longitudinal end to the other one of the inner chamber. Examples of continuous mixing devices are continuous twin-screw or multi-screw (e.g. ring mixers), penetrating and co-rotating, or planetary mixing devices.

The term 'planetary mixer' means a continuous mixing device having a central rotor and a plurality of satellites mixers, each of which, driven by the central rotor, rotates simultaneously about its own axis and about the central rotor.

Both the batch mixer and the continuous mixer are able to impart sufficient energy to the elastomeric composition to mix and disperse the filler in the elastomeric polymer even in case of cold feeding, unlike other elastomeric composition handling devices, such as conveyor devices and devices for manufacturing a semi-finished product.

### DESCRIPTION OF THE FIGURES

Figure 1 shows a radial half-section of a tyre for vehicle wheels, comprising at least one component formed by an elastomeric compound comprising the capsules according to the invention.
Figure 2 shows the IR spectrum (transmittance vs wavelength) of the TMPGE (epoxy) respectively alone and in simple mixture with EC, with the characteristic signal at 1475 cm⁻¹ of the unreacted epoxy groups of TMPGE highlighted.
Figure 3 shows the IR spectrum (transmittance vs wavelength) of the reaction mixture of TMPGE and EC before heating and after 20 and 72 hours at 90 °C.
Figure 4 shows a photograph of samples of cross-linked capsules according to the invention (Ex. 1B) and non-cross-linked comparative (Ex. 1C), before (left) and after (right) heating for 24 hours at 120 °C.
Figure 5 shows the diagram relating to the melting trend (melting degree of the sample: in ordinate, scale from 0 - no melting - to 10 - complete melting) of the TBBS as it is, of the TBBS encapsulated in non-cross-linked ethylcellulose (Ex. 1C, comparative) and of the TBBS encapsulated in cross-linked ethylcellulose according to the invention (Ex. 1B).
Figure 6 shows the trend of the torque S' measured in elastomeric compounds subjected to vulcanisation at 151 °C for 60 minutes, said compounds comprising respectively cross-linked TBBS capsules according to the invention (Ex. 4.1), non-cross-linked comparative TBBS capsules (Ex. 4.2) or a simple mixture of the TBBS/EC/TMPGE ingredients (Ex. 4.3 comparative).
Figure 7 shows the trend of the torque measured in elastomeric compounds subjected to vulcanisation at 151 °C for 60 minutes, said compounds comprising respectively cross-linked TBBS capsules according to the invention (Ex. 5.2 and 5.3) or a simple mixture of the TBBS/EC/TMPGE ingredients (Ex. 5.1 comparative).
Figure 8 shows the trend of the torque measured in elastomeric compounds of the invention (Ex. 6.3 and 6.4) subjected to vulcanisation at 151 °C for 60 minutes, said compounds prepared by dilution of concentrated masterbatches based on butadiene or styrene-butadiene (Ex. 6.1 and 6.2) comprising cross-linked TBBS capsules according to the invention (Ex. 1B).

### DETAILED DESCRIPTION OF THE INVENTION

The capsule according to the invention, characterised by one or more of the following preferred aspects taken alone or in combination with each other, will be illustrated in detail below.

The capsule of the invention is a rigid capsule for the rigidity of the cross-linked coating.

The capsule of the invention comprises a coating and a core.

The coating of the capsule of the invention comprises at least one cross-linked polymer.

The cross-linked polymer is obtained by cross-linking with cross-linking agents one or more cross-linkable polymers having reactive hydroxyl, thiol, carboxylic, anhydride or amino groups.

The cross-linkable polymers having reactive hydroxyl or amino groups are preferably selected from polysaccharides, in particular from the variously substituted cellulose derivatives, alkylates or acylates, such as for example ethyl cellulose, cellulose acetate, 2-hydroxyethyl cellulose, cellulose acetate butyrate, cellulose acetate phthalate, cyanoethylated cellulose, methylcellulose, hydroxypropyl cellulose, sodium carboxymethylcellulose, hydroxypropylmethyl cellulose, methyl 2-hydroxyethyl cellulose, starches and derivatives such as hydroxyethylated starch, amylose, chitosans, alginates such as sodium alginate, polyesters such as polylactic acid, poly(lactic-co-glycolic) acid (PLGA), melamine-formaldehyde resins, phenol-formaldehyde resins and urea-formaldehyde resins, NR, NBR or EPDM rubbers derivatised (grafted) with anhydrides, preferably with maleic anhydride.

Preferred cross-linkable polymers are cross-linkable, environmentally friendly and safe cellulose derivatives.

Preferably, the cross-linkable polymers are polysaccharides with a molecular weight of from 100000 to 500000 Daltons. Preferably, the cross-linkable polymers are polysaccharides with a molecular weight of from 100000 to 500000 Daltons selected from ethylcellulose, hydroxyethylcellulose, hydroxypropylcellulose, and carboxymethylcellulose.

Commercial examples of cross-linkable polymers are the Sigma-Aldrich ethylcellulose (viscosity 300 cP measured at 5% in toluene/ethanol 80:20, 48% ethoxyls) and the cellulose acetate butyrate CAB-381 by EASTMAN. Cross-linking agents suitable for cross-linking the aforementioned cross-linkable polymers are the products having at least two or more functional groups capable of reacting with hydroxyl, thiol, carboxylic, ester, anhydride or amino groups.

The cross-linking agents are products having two or more reactive groups such as:
- epoxy groups, such as in bisphenol A diglycidyl ether, in trimethylolpropene triglycidyl ether (TMPGE), in epoxy resins having epoxy groups such as cycloaliphatic epoxy resins, glycidylamino epoxy resins, or as in cardanol glycidyl ether, in epoxy soybean oil and in epoxidised castor oil;
- carboxylic groups, as in C2-C12 dicarboxylic acids such as for example malonic acid, succinic acid and fumaric acid, optionally activated as acyl halides - as in the C2-C12 dicarboxylic acids dihalides, for example oxalyl dihalides, malonyl dihalides, succinyl dihalides, glutaryl dihalides, adipyl dihalides or phthalyl dihalides - or such as esters, for example dimethyl esters of C2-C12 carboxylic acid such as dimethyl oxalate, higher homologues and the like;
- aldehyde groups, such as in glyoxal, succinaldehyde, adipaldehyde and glutaraldehyde,
- isocyanate groups, such as in toluene diisocyanate, methylene diphenyl diisocyanate and hexamethylene diisocyanate (HDI),
- hydroxyl groups such as for example 1,4 butanediol or 1,6 hexanediol,
- halogens as in C1-C6 dialoalkanes, such as dialo-methylene, -ethylene, - ethylidene, -trimethylene, -tetramethylene, -pentamethylene and -hexamethylene. The preferred halides are bromides or, in particular, chlorides.

Other suitable cross-linking agents are the compounds of formula:

Q(OR)₄ (I)

where Q is Sn, Si, Pb, Ge, Ti or, Zr, and R is C1-C4 alkyl.

Q is preferably Si, Ti or Zr. R is, for example, methyl, ethyl, n-propyl, isopropyl, n-butyl, sec-butyl or tert-butyl, and is preferably ethyl, n-propyl, isopropyl or n-butyl. The inorganic compounds of Zr, Ti and Sn such as ZrOCl₂, TiOSO₄ and SnCl₄ may also be used as cross-linking agents.

Further suitable cross-linking agents are boron compounds such as boric acid and salts thereof, preferably alkali metal salts of polyboric acids, for example sodium and potassium tetraborate, as well as aluminium compounds of formulas:

Al(NO₃)₃, Al₂(SO₄)₃ or M Al(SO₄)₂ (II)

wherein M is potassium or sodium.

Boric acid, sodium tetraborate, aluminium nitrate and aluminium sulphate are preferred.

Commercial example of a suitable cross-linking agent is the trimethylolpropene triglycidyl ether of Sigma-Aldrich.

The cross-linked polymer of the capsule coating according to the invention is preferably characterised by a cross-linking degree which can involve about 5% to 50% of said reactive groups of the cross-linkable polymer, preferably about 10% to 20%.

The limiting agent in the cross-linking reaction is usually the cross-linking agent. In the case of cross-linking agent with epoxy groups, the cross-linking trend and the disappearance of the cross-linking agent can be followed by observing the epoxy signals in the IR analysis.

The cross-linked polymer of the capsule coating according to the invention is preferably characterised by a softening start temperature generally higher than 110 °C, preferably higher than 120 °C, more preferably higher than 130 °C, even more preferably higher than 140 °C.

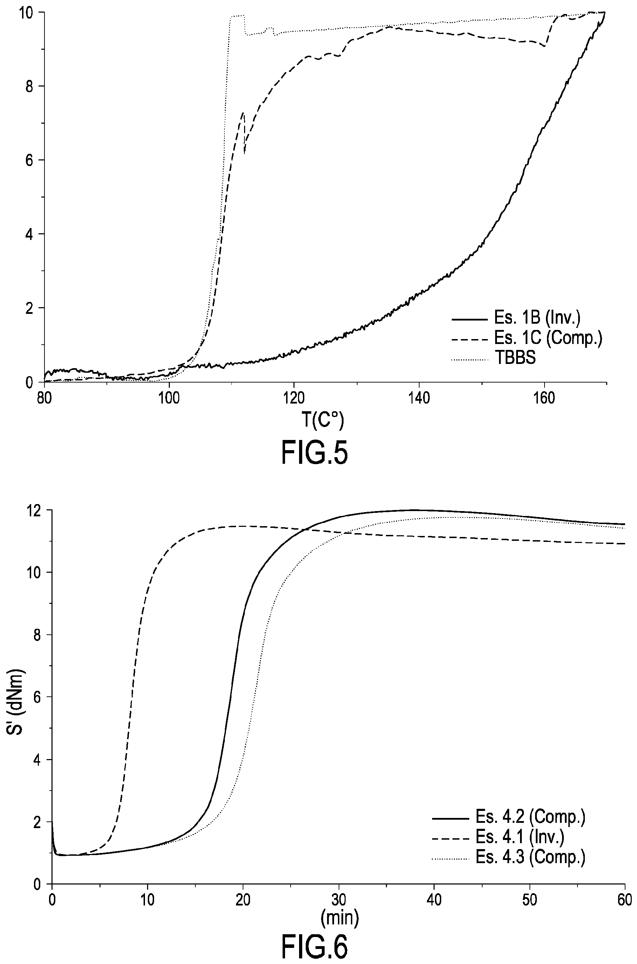

The DSC plot of the cross-linked capsules of the invention does not show the sharp endothermic peak typical of non-cross-linked polymers. On the contrary, the plot shows only a little intense and widened peak, consistently with the thermal behaviour of the cross-linked polymers which show no sharp first order transitions. As can be seen in Fig. 5, as heating proceeds and following the melting of the encapsulated TBBS, the capsule of the invention (Ex. 1B) undergoes a slow process of disintegration, which is associated with the gradual release of the accelerant (A) and/or its decomposition by-products.

The capsule of the invention comprises a core comprising at least one thermolabile vulcanisation accelerant (A) having a melting point lower than 140°C.

The term "thermolabile vulcanisation accelerant" means a vulcanisation accelerant which, due to the heating effect, decomposes to yield one or more compounds capable of accelerating the vulcanisation reaction (i.e. decreasing the duration of the vulcanisation process and/or the operating temperature), preferably sulphur vulcanisation, of an elastomeric material.

The thermolabile vulcanisation accelerant (A) is generally selected from xanthates, dithiocarbamates, thiurams, thiazole derivatives, sulphenamides, guanidines and thiourea derivatives, preferably from sulphenamides.

Preferably, the thermolabile vulcanisation accelerant (A) is selected from tetramethylthiouram monosulphide (TMTM), tetramethylthiuram disulphide, benzothiazyl-2-sulphene morpholide (MBS), benzothiazyl-2-cyclohexyl-sulphenamide (CBS), benzothiazyl-2-tert.-butyl-butyl (TBBS), benzothiazildicyclohexyl sulphenamide (DCBS), diphenyl guanidine (DPG), diortotolyl guanidine (DOTG), o-tolylbiguanide (OTBG), zinc-N-dimethyl-dithiocarbamate (ZDMC), zinc-N-diethyl-dithiocarbamate (ZDEC), zinc- N-dibutyl-dithiocarbamate (ZDBC), zinc-N-ethylphenyldithiocarbamate (ZEBC), zinc-N-pentamethylene dithiocarbamate (ZPMC), ethylentiourea (ETU), diethylthiourea (DETU), diphenylthiourea (DPTU).

The thermolabile vulcanisation accelerant (A) is characterised by a melting point, typically associated with at least partial decomposition, lower than 140 °C, typically lower than 120 °C or 110 °C. For example, TBBS melts at about 104 °C, CBS at about 97-105 °C and tetramethylthiouram disulphide at about 107 °C.

The coating of the present capsules, thanks to the cross-linking, keeps the structure of the capsule intact for longer, allowing a better distribution in the elastomeric mass, the complete fusion of the thermolabile vulcanisation accelerant (A) contained therein and, presumably, its partial or complete thermal decomposition before release from the capsule. These combined effects result in a rapid and uniform vulcanisation of the compound which incorporates the present capsules.

The capsule according to the invention comprises at least 10%, preferably at least 20%, more preferably at least 30%, even more preferably at least 40%, even more preferably at least 50% by weight with respect to the overall weight of the capsule, of the at least one thermolabile vulcanisation accelerant (A).

Preferably, the capsule according to the invention comprises 10% to 80% by weight of the at least one thermolabile vulcanisation accelerant (A) and 90% to 20% by weight of the cross-linked coating, with respect to the overall weight of the capsule. Optionally, the capsule of the invention may comprise surfactant, for example from 0 to 5% by weight with respect to the total weight of the capsule.

Preferably, the capsule according to the invention consists of 10% to 80% by weight of the at least one thermolabile vulcanisation accelerant (A), 90% to 20% by weight of the coating and optionally 0 to 5% by weight of surfactant, with respect to the total weight of the capsule.

In case of multiple accelerants (A), the above preferences apply to their total quantity.

The capsule of the invention can generally have a capsule or spheroidal shape.

Given the possible irregular shape of the capsules, to characterise their size reference is made to an average diameter, which corresponds to the size of the opening of the sieve links through which the capsules pass, being held by the immediately lower sieve.

The capsule of the invention has an average diameter of less than 200 microns, preferably less than 100 microns, more preferably less than 50 microns.

A further aspect of the present invention is an emulsion process for the preparation of the capsules of the invention described above.

The present preparation process is characterised by one or more of the present features taken individually or in combination.

The present process provides a solution (organic phase) of at least one cross-linkable polymer, selected from cellulose derivatives, starch and derivatives, chitosans, alginates, polyesters, phenol-formaldehyde resins, anhydrides derivatised NR, NBR or EPDM rubbers and at least one thermolabile vulcanisation accelerant (A) in a suitable organic solvent, immiscible with water.

Ideally, the organic solvent should be able to dissolve both the cross-linkable polymer and the accelerant (A), be immiscible with water and sufficiently low-boiling to be completely evaporated at the end and not be trapped in the capsules.

The term "sufficiently low-boiling" indicates a boiling point of the organic solvent preferably lower than 120°C, more preferably lower than 100 °C, even more preferably lower than 80°C at room pressure.

Suitable organic solvents usable in the present process of preparing the capsules of the invention are chlorinated solvents, such as dichloromethane, chloroform, carbon tetrachloride, dichloroethane and the like, aromatic solvents such as toluene, xylenes and the like, halogenated aromatics such as chlorine benzene, dichlorobenzene and the like, aliphatic hydrocarbons such as hexane, cyclohexane and the like, esters such as ethyl acetate, methyl acetate, isopropyl acetate and the like, the ethers such as diethyl ether, diisopropyl ether, tetrahydrofuran, dioxane and the like, and mixtures thereof.

A particularly preferred solvent is ethyl acetate.

Generally, the solvent is used, depending on the solubility of the materials, in a weight ratio from 50:1 to 0.5:1, preferably from 20:1 to 0.7:1, more preferably from 10:1 to 1:1, even more preferably from 5:1 to 1:1, with respect to the overall weight of the accelerant (A) and of the cross-linkable polymer.

To favour the complete dissolution of the cross-linkable polymer and of the thermolabile vulcanisation accelerant (A), various mixing techniques can be used, such as for example magnetic, mechanical stirrers or the like.

In the organic phase of the present process, the cross-linkable polymer and the thermolabile vulcanisation accelerant (A) are generally present in a weight ratio comprised between 10:1 and 0.1:1, preferably between 7:1 and 0.3:1, more preferably between 5:1 and 0.5:1, even more preferably around 1:1.

In a variant of the present process, a cross-linking agent selected from among
the products having two or more epoxy groups, carboxylic groups, possibly activated as acyl halides or as esters, aldehyde groups, isocyanate groups, hydroxyl groups, halogens,
the products of formula (I)

   Q(OR)₄ (I)
where Q is Sn, Si, Pb, Ge, Ti or, Zr, and R is C1-C4 alkyl,
the inorganic products of Zr, Ti and Sn,
the boron products such as boric acid and salts thereof,
the aluminium products of formula (II)

   Al(NO₃)₃, Al₂(SO₄)₃ or M Al(SO₄)₂ (II)
wherein M is potassium or sodium, may also be added to the organic phase, in the ratios and quantities specified below.

In the present emulsion process, at least one surfactant is added to improve the yield and efficiency of the encapsulation.

The surfactant can be selected from non-ionic surfactants, preferably from polyvinyl alcohols (PVA), ethoxylated sorbitan derivatives (Tweens^{™}), sorbitan esters (Spans^{™}), polyethoxylated castor oils (Kolliphor^{™}), alkylpolyethylene glycol (Triton^{™}), polyoxyethylene ethers (Brij^{™}) and mixtures thereof, more preferably the surfactant is PVA.

Preferably, the HLB of the surfactant or of the surfactant mixture is between 10 and 20.

Preferably, the surfactant is added in a percentage by weight comprised between 0.2% and 10% by weight, preferably between 0.5% and 5% by weight, more preferably between 0.8% and 2% by weight with respect to the weight of water.

The surfactant is preferably added dissolved in water to give an aqueous phase.

Alternatively, the surfactant may be added to the organic phase before the addition of the aqueous phase.

In another variant, the surfactant is subsequently added to the mixture of the organic phase and aqueous phase.

In a variant, the aqueous phase comprising the surfactant is added to the solution of the cross-linkable polymer and of the thermolabile vulcanisation accelerant (A) (organic phase) and only then is the cross-linking agent added.

In another variant, the organic phase comprising the cross-linkable polymer, the thermolabile vulcanisation accelerant (A) and the cross-linking agent is added to the aqueous phase comprising the surfactant.

Preferably, the weight ratio between water and organic solvent immiscible with water is comprised between 10:1 and 0.1:1, more preferably between 5:1 and 0.5:1, even more preferably between 4:1 and 2:1.

To favour the formation of the emulsion, various mixing techniques can be used, preferably by homogenisation, for example with Ultra Turrax homogenisers. During homogenisation, to avoid the evaporation of the solvent, it is possible to suitably cool the solution, for example to a temperature from 0 to 20 °C, preferably from 0 to 10 °C.

In a variant of the present process, the at least one cross-linking agent is added to the emulsion comprising the cross-linkable polymer, the thermolabile vulcanisation accelerant (A) and the surfactant.

The cross-linking agent may be added as it is or, alternatively, dissolved in a suitable organic solvent, preferably selected from the organic solvents of the organic phase mentioned above.

In the present process, the cross-linking agent is preferably used in a percentage by weight comprised between 1% and 15%, preferably between 5% and 15%, more preferably between 8% and 12%, even more preferably around 10% by weight with respect to the cross-linkable polymer.

In a preferred embodiment of the present process, the cross-linkable polymer is a cross-linkable cellulose derivative, the thermolabile vulcanisation accelerant (A) is a sulphenamide and the cross-linking agent is a di- or triepoxide.

In a more preferred embodiment of the present process, the cross-linkable polymer is ethylcellulose, the thermolabile vulcanisation accelerant (A) is TBBS and the cross-linking agent is TMPGE.

The cross-linking agent is preferably added to the reaction mixture slowly.

In the present process, in the reaction emulsion comprising the cross-linkable polymer, the thermolabile vulcanisation accelerant (A), the cross-linking agent and the surfactant, capsules may already be formed but not cross-linked.

Typically with the addition of the cross-linker, an increase in the viscosity of the reaction mixture is observed caused by a beginning of cross-linking of the cross-linkable polymer already at room temperature.

The present process comprises at least one heating step for cross-linking to take place.

By suitably varying the temperature and duration of the heating, it is possible to modulate the cross-linking and obtain coatings with different degrees of cross-linking.

The heating step is preferably carried out on the non-cross-linked capsules isolated from it.

The term "non-cross-linked capsules" is intended herein to indicate the capsules in which cross-linking may have occurred partially but in negligible amounts, involving for example 5% or less of the cross-linkable reactive groups of the cross-linkable polymer.

The heating step is preferably carried out on the non-cross-linked capsules isolated from the reaction mixture, preferably in an oven, at a temperature of between 70 and 150 °C, preferably between 80 and 130 °C, for a period of 5 to 20 hours, preferably 8 to 15 hours.

The non-cross-linked capsules can be isolated from the reaction mixture, for example by evaporation of the organic solvent and subsequent centrifugation of the aqueous phase.

Preferably after cross-linking, the cross-linkable polymer maintains at least 20%, more preferably at least 30%, even more preferably at least 50% of the cross-linkable reactive groups free.

Preferably, after cross-linking, the cross-linkable cellulose derivatives maintain at least 20%, more preferably at least 30%, even more preferably at least 50% of the cross-linkable hydroxyl groups free.

The Applicant has observed that continuing further in the cross-linking, the viscosity of the organic phase increases significantly, making processing more difficult.

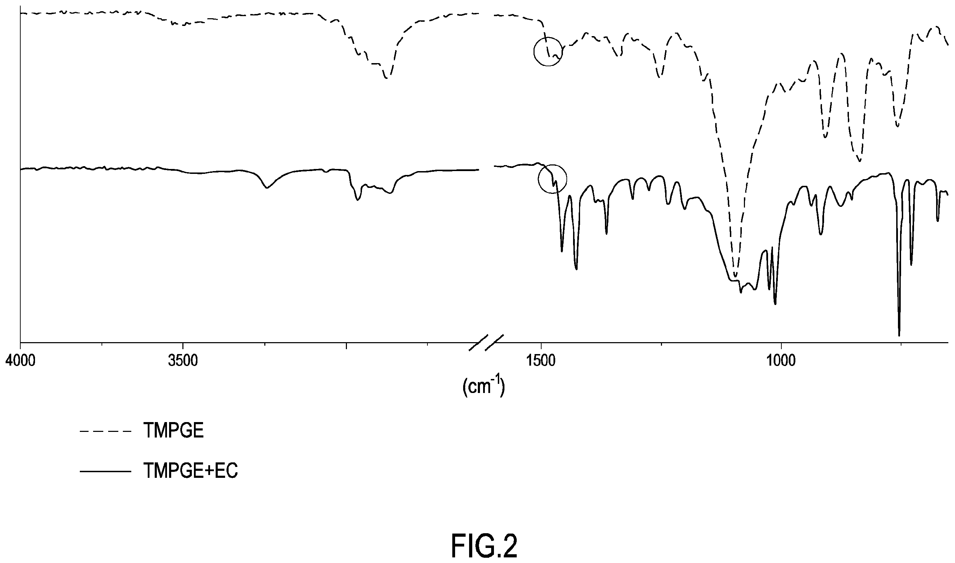

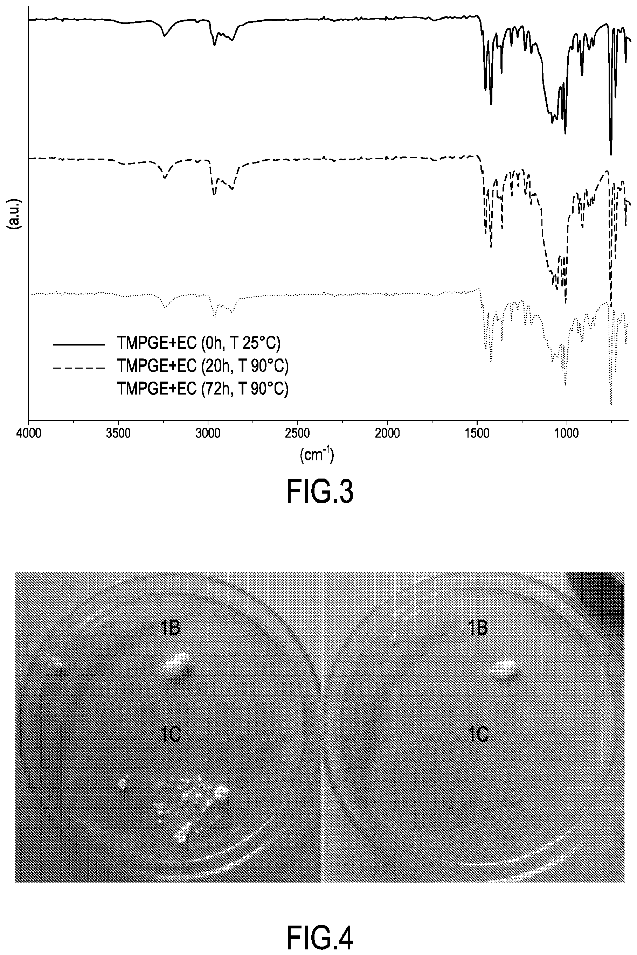

The cross-linking reaction may be followed by IR spectroscopy, as shown in Fig. 2 and 3.

A preferred process for preparing the capsules comprises:
- providing a solution of at least one cross-linkable cellulose derivative and at least one thermolabile vulcanisation accelerant (A), preferably selected from among tetramethylthiuram monosulphide (TMTM), tetramethylthiuram disulphide, benzothiazyl-2-sulfene morpholide (MBS), benzothiazyl-2-cyclohexyl-sulfenamide (CBS), benzothiazyl-2-tert.-butyl-sulfenamide (TBBS), benzothiazyldicyclohexyl sulphenamide (DCBS), diphenyl guanidine (DPG), diorthotolyl guanidine (DOTG), o-tolylbiguanide (OTBG), zinc-N-dimethyl-dithiocarbamate (ZDMC), zinc-N-diethyldithiocarbamate (ZDEC), zinc-N-dibutyl-dithiocarbamate (ZDBC), zinc-N-ethylphenyldithiocarbamate (ZEBC), zinc-N-pentamethylene dithiocarbamate (ZPMC), ethylenethiourea (ETU), diethylthiourea (DETU), and diphenylthiourea (DPTU), in at least one suitable organic solvent immiscible with water, selected from among chlorinated solvents, aromatic and aromatic halides solvents, aliphatic hydrocarbons, esters, ethers and mixtures thereof,
- providing an aqueous phase comprising at least one non-ionic surfactant,
- mixing said organic phase and said aqueous phase together to provide an emulsion,
- adding to the emulsion at least one cross-linking agent comprising at least two epoxy groups,
- allowing the emulsion to react, preferably under stirring, in order to produce the non-cross-linked capsules,
- isolating the non-cross-linked capsules from the emulsion, and
- subjecting the capsules to cross-linking at a temperature of between 70 and 150 °C, and for a period of 5 to 20 hours, thus obtaining the cross-linked capsules, wherein
   the cross-linkable cellulose derivative and the thermolabile vulcanisation accelerant (A) are used in a weight ratio between 10:1 and 0.1:1,
   the cross-linking agent is used in a percentage by weight between 1% and 20%, by weight with respect to the cross-linkable cellulose derivative, and
   the weight ratio between water and water-immiscible organic solvent is between 10:1 and 0.1:1.

A more preferred process for preparing the capsules comprises:
- providing a solution of at least one cross-linkable cellulose derivative and of the vulcanisation accelerant TBBS (A) in at least one suitable organic solvent immiscible with water, selected from among chlorinated solvents, aromatic and aromatic halides solvents, aliphatic hydrocarbons, esters, ethers and mixtures thereof,
- providing an aqueous phase comprising at least one non-ionic surfactant,
- mixing said organic phase and said aqueous phase together to provide an emulsion,
- adding to the emulsion at least one cross-linking agent comprising at least two epoxy groups,
- allowing the emulsion to react, preferably under stirring, in order to produce the non-cross-linked capsules,
- isolating the non-cross-linked capsules from the emulsion, and
- subjecting the capsules to cross-linking at a temperature of between 70 and 150 °C, and for a period of 5 to 20 hours, thus obtaining the cross-linked capsules, wherein
   the cross-linkable cellulose derivative and the TBBS are used in a weight ratio between 5:1 and 0.5:1,
   the cross-linking agent is used in a percentage by weight between 8% and 12%, by weight with respect to the cross-linkable cellulose derivative, and
   the weight ratio between water and water-immiscible organic solvent is between 4:1 and 2:1.

A further aspect of the present invention is a capsule obtainable according to the process described above, having one or more of the above features alone or in combination.

A further aspect of the invention is an elastomeric composition for tyres comprising the capsule according to the invention.

The elastomeric composition for tyres according to the present invention is characterised by one or more of the following preferred aspects taken alone or in combination with one another.

The elastomeric composition for tyres according to the invention preferably comprises 0.5 to 10 phr, more preferably 1 to 5 phr of at least one thermolabile vulcanisation accelerant (A) having a melting point lower than 140°C encapsulated in a capsule according to the invention.

The preferred aspects of the capsule according to the invention described above apply equally to the capsules comprised in the present elastomeric composition.

The present elastomeric composition preferably comprises from 20 to 0.1 phr, preferably from 10 to 1 phr of capsules according to the invention.

The elastomeric composition for tyres according to the invention comprises at least 100 phr of at least one diene elastomeric polymer (B).

The diene elastomeric polymer (B) used in the present process may be selected from those commonly used in sulphur-vulcanisable elastomeric compositions, which are particularly suitable for producing tyres, i.e. from among elastomeric polymers or copolymers with an unsaturated chain having a glass transition temperature (Tg) generally lower than 20 °C, preferably in the range from 0 °C to -110 °C.

The diene elastomeric polymer may have a weight average molecular weight (Mw) higher than 80000 g/mol.

Optionally, the diene elastomeric polymer may also comprise diene polymers with a lower molecular weight, for example liquid polymers such as LIR50 with an average molecular weight of around 50000 g/mol.

These polymers or copolymers may be of natural origin or may be obtained by solution polymerization, emulsion polymerization or gas-phase polymerization of one or more conjugated diolefins, optionally mixed with at least one comonomer selected from monovinylarenes and/or polar comonomers in an amount not exceeding 60% by weight.

The conjugated diolefins generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene and mixtures thereof.

1,3-butadiene and isoprene are particularly preferred.

Monovinylarenes, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4- (4-phenylbutyl)styrene, and mixtures thereof. Styrene is particularly preferred.

Polar comonomers that may optionally be used, can be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile and mixtures thereof.

Preferably, the diene elastomeric polymer (B) which can be used in the present invention can be selected, for example, from: cis-1,4-polyisoprene (natural or synthetic, preferably natural rubber), 3,4-polyisoprene, polybutadiene (in particular polybutadiene with a high content of 1,4-cis), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, and mixtures thereof.

The present elastomeric composition may possibly comprise an elastomeric polymer of one or more monoolefins with an olefinic comonomer or derivatives thereof (A'). The monoolefins can be selected from: ethylene and α-olefins generally containing from 3 to 12 carbon atoms, such as for example propylene, 1-butene, 1-pentene, 1-hexene, 1-octene and mixtures thereof. The following are preferred: copolymers selected from ethylene and an α-olefin, optionally with a diene; isobutene homopolymers or copolymers thereof with small amounts of a diene, which are optionally at least partially halogenated. The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene and mixtures thereof. Among them, the following are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; or mixtures thereof.

A diene elastomeric polymer (B) or an elastomeric polymer (B') functionalised by reaction with suitable terminating agents or coupling agents may also be used. In particular, the diene elastomeric polymers obtained by anionic polymerization in the presence of an organometallic initiator (in particular, an organolithium initiator) may be functionalised by reacting the residual organometallic groups derived from the initiator with suitable terminating agents or coupling agents such as, for example, imines, carbodiimides, alkyltin halides, substituted benzophenones, alkoxysilanes or aryloxysilanes.

In the present description, the term at least one elastomeric polymer (B) means that one or more diene elastomeric polymers (B) as defined above may be present in a mixture.

In the present composition, the quantity of the at least one elastomeric polymer (B) or the mixture of two or more elastomeric polymers (B) as defined above amounts to a total of 100 phr.

Commercial examples of the diene elastomeric polymer (B) are the BUNA CB 25 butadiene from ARLANXEO or the styrene-butadiene EUROPRENE 1500 from Versalis.

The elastomeric composition for tyres according to the invention preferably comprises at least one reinforcing filler (C).

The elastomeric composition for tyres according to the invention preferably comprises from 3 phr to 90 phr, more preferably from 20 to 80 phr of at least one reinforcing filler (C).

The elastomeric composition for tyres according to the invention preferably comprises at least one reinforcing filler (C) selected from carbon black, conventional silica, such as sand silica precipitated with strong acids, preferably amorphous, diatomaceous earth, calcium carbonate, titanium dioxide, talc, alumina, aluminosilicates, kaolin, silicate fibres and mixtures thereof.

Preferably, the reinforcing filler (C) is selected from carbon black, conventional silica, silicate fibres and mixtures thereof.

The elastomeric composition for tyres of the invention may optionally comprise one or more reinforcing fillers (C) as defined above in a mixture.

Commercial examples of reinforcing fillers (C) suitable for use in the present elastomeric composition are the carbon black N326 and N375 from Cabot, the carbon black N326 and N375 from Birla.

The elastomeric composition for tyres according to the invention comprises at least one vulcanising agent (D).

The at least one vulcanising agent (D) is preferably selected from sulphur, or alternatively, sulphur-containing molecules (sulphur donors), such as for example caprolactam disulphide (CLD), bis (trialcoxysilyl)propyl]polysulphides, dithiophosphates, phosphorylpolysulphide (SDT) and mixtures thereof.

Preferably, the vulcanising agent (D) is sulphur, preferably selected from soluble sulphur (crystalline sulphur), insoluble sulphur (polymeric sulphur), and oil-dispersed sulphur and mixtures thereof.

Commercial examples of vulcanising agents (D) suitable for use in the elastomeric composition for tyres of the invention are 67% sulphur known by the commercial name of Crystex OT33 from Eastman and Rhenogran CLD 80 from Lanxess.

The vulcanising agent (D) may be present in the elastomeric composition of the invention in an overall amount generally of from 0.1 to 15 phr, preferably from 0.5 to 12 phr, even more preferably from 1 to 10 phr.

The present elastomeric composition may possibly comprise one or more vulcanising agents (D) as defined above in a mixture.

The elastomeric composition for tyres according to the invention may optionally comprise at least one compatibilising agent.

The term "compatibilising agent" means a product capable of interacting with the reinforcing filler, in particular with silica, and binding it to the diene elastomeric polymer during vulcanisation.

Preferably, the compatibilising agent suitable for use in the present composition is a silane selected from those having at least one hydrolysable silane group, which may be identified, for example, by the following general formula (III):

(R)₃Si-CₙH₂ₙ-X (III)

where the R groups, which may be the same or different, are selected from alkyl, alkoxy or aryloxy groups or from halogen atoms, provided that at least one of the R groups is an alkoxy or aryloxy group or a halogen; n is an integer of from 1 to 6, inclusive; X is a group selected from: nitrous, mercapto, amino, epoxide, vinyl, imide, chlorine, -(S)ₘCₙH₂ₙ-Si-R₃ and -S-COR, where m and n are integers of from 1 to 6 inclusive and the R groups are as defined above.

Preferred compatibilising agents are bis(3-triethoxysilylpropyl)tetrasulphide (TESPT) and bis(3-triethoxyisilylpropyl)disulphide (TESPD).

Commercial examples of compatibilising agents suitable for use in the present elastomeric composition are bis(3-triethoxysylpropyl)tetrasulphide Si69 marketed by Evonik and Silane NXT from Momentive.

If present, the compatibilising agent is included in the elastomeric composition for tyres of the invention in a total quantity from 0.1 phr to 20 phr, preferably from 0.5 phr to 10 phr.

The present elastomeric composition may possibly comprise one or more compatibilising agents as defined above in a mixture.

The elastomeric composition for tyres according to the invention may optionally comprise at least one antioxidant agent.

The antioxidant agent is preferably selected from N-isopropyl-N'-phenyl-p-phenylenediamine (IPPD), N-(-1,3-dimethyl-butyl)-N'-phenyl-p-phenylenediamine (6PPD), N,N'-bis-(1,4-dimethyl-pentyl)-p-phenylenediamine (77PD), N,N'-bis-(1-ethyl-3-methyl-pentyl)-p-phenylenediamine (DOPD), N,N'-bis-(1,4-dimethyl-pentyl)-p-phenylenediamine, N,N'-diphenyl-p-phenylenediamine (DPPD), N,N'-ditolyl-p-phenylenediamine (DTPD), N,N'-di-beta-naphthyl-p-phenylenediamine (DNPD), N,N'-bis(1-methylheptyl)-p-phenylenediamine, N,N'-Di-sec-butyl-p-phenylenediamine (44PD), N-phenyl-N'-cyclohexyl-p-phenylenediamine, N-phenyl-N '-1-methylheptyl-p-phenylenediamine and the like and mixtures thereof, preferably it is N-1,3-dimethylbutyl-N'-phenyl-p-phenylenediamine (6-PPD).

A commercial example of a suitable antioxidant agent is 6PPD from Solutia/Eastman or Santoflex produced by Flexsys.

The antioxidant agent may be present in the elastomeric composition in an overall amount generally from 0 phr to 20 phr, preferably from 0.5 phr to 10 phr.

The elastomeric composition for tyres according to the invention may optionally comprise at least one wax.

The wax may be for example a petroleum wax or a mixture of paraffins.

Commercial examples of suitable waxes are the Repsol N-paraffin mixture and the Antilux^{®} 654 microcrystalline wax from Rhein Chemie.

The wax may be present in the elastomeric composition of the invention in an overall amount generally from 0.1 phr to 20 phr, preferably from 0.5 phr to 5 phr.

The elastomeric composition for tyres according to the invention may optionally comprise one or more further vulcanisation additives, such as activating agents and retardants.

The elastomeric composition for tyres according to the invention may optionally comprise at least one vulcanisation activator.

The vulcanisation activating agents suitable for use in the present elastomeric composition are zinc compounds, in particular ZnO, ZnCO₃, zinc salts of saturated or unsaturated fatty acids containing from 8 to 18 carbon atoms, such as, for example, zinc stearate, which are preferably formed in situ in the elastomeric composition by reaction of ZnO and of the fatty acid, as well as Bi₂O₃, PbO, Pb₃O₄, PbO₂, or mixtures thereof.

Preferably, the vulcanisation activators are present in the elastomeric composition for tyres of the invention in amounts from 0.2 to 15 phr, preferably from 0.5 to 10 phr.

Preferred activator agents derive from the reaction of zinc oxide and stearic acid. The elastomeric composition for tyres according to the invention may optionally comprise at least one vulcanisation retardant.

The vulcanisation retardant agent suitable for use in the present elastomeric composition for tyres is preferably selected from urea, phthalic anhydride, N-nitrosodiphenylamine N-cyclohexylthiophthalimide (CTP or PVI) and mixtures thereof.

A commercial example of a suitable retardant agent is N-cyclohexylthiophthalimide VULKALENT G of Lanxess.

The vulcanisation retardant agent may be present in the present elastomeric composition in an amount of generally from 0.05 phr to 2 phr.

The present elastomeric composition may comprise one or more vulcanisation retardant agents as defined above in a mixture.

The elastomeric composition for tyres according to the invention may comprise at least one other vulcanisation accelerant agent, in addition to that encapsulated in the capsules of the invention.

The further vulcanisation accelerant agent is preferably selected from dithiocarbamates, guanidines, thioureas, thiazoles, sulphenamides, thiurams, amines, xanthates and mixtures thereof.

Preferably, the further accelerant agent is selected from mercaptobenzothiazole (MBT), 4-aminodiphenylamine (4-ADPA), N-cyclohexyl-2-benzothiazol-sulphenamide (CBS), N-tert-butyl-2-benzothiazol-sulphenamide (TBBS) and mixtures thereof.

Commercial examples of vulcanisation accelerants suitable for use in the present elastomeric composition for tyres are N-cyclohexyl-2-benzothiazyl-sulphenamide Vulkacit^{®} (CBS or CZ), N-tert-butyl 2-benzothiazyl sulphenamide, Vulkacit^{®} NZ/EGC marketed by Lanxess.

The further vulcanisation accelerant agent may be comprised in the present elastomeric composition for tyres in an overall amount generally from 0.05 phr to 10 phr, preferably from 0.1 phr to 5 phr.

The present elastomeric composition may comprise one or more accelerant agents as defined above in a mixture.

The present elastomeric composition for tyres may possibly comprise other additives commonly used in the production of tyre products, selected on the basis of the specific application for which the composition is intended. For example, the following may be added: anti-ageing agents, plasticisers, adhesives, anti-ozone agents, modifying resins, or mixtures thereof.

In particular, in order to further improve the processability of the compound, the composition may optionally be admixed with at least one plasticiser generally selected from mineral oils, vegetable oils, synthetic oils, polymers with a low molecular weight and mixtures thereof, such as, for example, aromatic oil, naphthenic oil, phthalates, soybean oil and mixtures thereof.

The amount of plasticiser is preferably from 0.1 phr to 70 phr, preferably from 5 phr to 30 phr.

In a preferred embodiment, the elastomeric composition of the invention comprises at least
0.5 to 5 phr of at least one thermolabile vulcanisation accelerant (A) encapsulated in a capsule according to the invention,
100 phr of at least one diene elastomeric polymer (B),
0.1 to 120 phr of at least one reinforcing filler (C), and
0.1 to 15 phr of at least one vulcanising agent (D).

In a preferred embodiment, the elastomeric composition of the invention comprises at least
0.5 to 5 phr of TBBS (A) encapsulated in a capsule according to the invention,
100 phr of at least one diene elastomeric polymer (B),
0.1 to 120 phr of at least one reinforcing filler (C), and
0.1 to 15 phr of at least one vulcanising agent (D),
wherein said capsule has been obtained by cross-linking a cross-linkable derivative of cellulose with a cross-linking agent having at least two epoxy groups.

Preferably, the present elastomeric composition comprises at least one reinforcing filler and one or more diene elastomeric polymers selected from natural rubbers, butadiene, isoprene and styrene-butadiene.

A further aspect of the present invention is a vulcanisable elastomeric compound for tyres obtained by mixing and possibly heating the components of the elastomeric composition for tyres of the invention, or a vulcanised elastomeric compound obtained by vulcanisation thereof.

The vulcanisable elastomeric compound according to the invention is characterized by a vulcanisation time (T-MH) of less than 20 minutes, preferably less than 15 minutes, measured according to ISO6502 (at 151 °C).

The vulcanisable elastomeric compound according to the invention is characterized by a vulcanisation time (T-MH) generally at least 30% lower, preferably at least 40% lower, even more preferably at least 50% lower than the vulcanisation time of the corresponding compound having the same composition but in which the same amount of the same accelerant (A) was added in the compound as it is, that is, in an unencapsulated form.

The present vulcanisable elastomeric compound comprises the capsules of the invention incorporating the thermolabile vulcanisation accelerant (A).

The presence of the capsules in the vulcanisable elastomeric compound of the invention may be detected, for example, by means of microscopic observation (SEM) of suitable sections of the material.

A further aspect of the present invention is a process for the preparation of a vulcanisable elastomeric compound for tyres, said process comprising one or more mixing steps in at least one suitable mixer of at least one thermolabile vulcanisation accelerant (A) having a melting point lower than 140°C encapsulated in capsules according to the invention, at least one diene elastomeric polymer (B), optionally at least one reinforcing filler (C) and at least one vulcanising agent (D).

Preferably in the present preparation process, after the addition of said at least one thermolabile vulcanisation accelerant (A) encapsulated in a capsule according to the invention, the temperature of the mixing compound does not exceed 140 °C, preferably does not exceed 120 °C.

In one embodiment, the present process comprises
- a mixing step (1) which comprises mixing and possibly heating to a mixing temperature between 120 °C and 160 °C, in at least one suitable mixer:
- at least one elastomeric polymer (B),
- at least one reinforcing filler (C), and
   optionally, at least one thermolabile vulcanisation accelerant (A) encapsulated in a capsule according to the invention, in such case maintaining the temperature lower than 140 °C,
   to yield a non-vulcanisable elastomeric compound (m1);
- a mixing step (2) which comprises incorporating in the non-vulcanisable elastomeric compound (m1):
   at least one vulcanising agent (D),
   at least one thermolabile vulcanisation accelerant (A) encapsulated in a capsule according to the invention, if not already completely added in step (1), optionally, vulcanisation accelerant and/or retardant agents,
   and mixing at a mixture temperature not higher than 120 °C, preferably not higher than 105 °C, to yield a vulcanisable elastomeric compound (m2), and
- a step of unloading (3) of the vulcanisable elastomeric compound (m2).

In a preferred embodiment of the present process, the at least one thermolabile vulcanisation accelerant (A) encapsulated in a capsule according to the invention, is added in step (I) keeping the compound temperature lower than 140 °C.

In this variant, the dispersion step of the capsules in the elastomeric mass is advantageously prolonged providing a better dispersion.

Alternatively, the at least one thermolabile vulcanisation accelerant (A) encapsulated in a capsule according to the invention is added in part or completely in step (II).

In an embodiment of the present process, the at least one thermolabile vulcanisation accelerant (A) encapsulated in a capsule according to the invention is first incorporated in at least a first diene elastomeric polymer (B) providing a concentrated masterbatch and then diluted successively in the same or another at least one diene elastomeric polymer (B).

The mixing step (1) may comprise multiple intermediate processes during which one or more of the additives are incorporated, followed by further processing. This step, which does not involve the addition of the vulcanising agent (D), is also referred to as the non-productive step.

This step may comprise a "chewing step", that is an initial step during which the one or more diene elastomeric polymers (B) are mechanically processed, possibly hot, in order to form the elastomeric mass and make it more processable and homogeneous. In this step, the polymer is generally processed, possibly with plasticisers, lowering the viscosity thereof and increasing the exposed surface thereof, thus making it easier to incorporate additives, in particular fillers.

The processing of the components may be performed in one or more suitable mixers, for example in an open mixer of the "open-mill" type or an internal mixer of the type with tangential rotors (Banbury^{®}) or with interpenetrating rotors (Intermix), or in continuous mixers of the Ko-Kneader^{™} type (Buss^{®}) or of the twin-screw or multi-screw type.

The processing may be discontinuous, i.e. in batches, or continuous, with the simultaneous or, preferably, sequential addition of the components.

In the case of batch processes, the processing may be carried out in one or, preferably, in several stages, carried out in the same or in different mixers, at the end of which the compound is generally discharged.

In the case of continuous processes, carried out for example in planetary, twin-screw, multi-screw or ring mixers, after the addition of the at least one thermolabile vulcanisation accelerant (A) encapsulated in a capsule according to the invention, the temperature of the compound is kept lower than 140 °C, preferably lower than 120 °C.

Generally the processing of step (I) of the components can last a total of 2 to 15 minutes, at temperatures ranging from 70 to 160 °C, preferably from 130 to 160 °C. However, in the case in which the at least one thermolabile vulcanisation accelerant (A) encapsulated in a capsule according to the invention is added in step (I), the temperature of the compound is kept lower than 140 °C, preferably at 120 °C.

After one or more processing stages of step (I), in the non-vulcanisable elastomeric compound thus prepared is incorporated the at least one vulcanising agent (D), preferably sulphur-based, optionally the at least one thermolabile vulcanization accelerant (A) encapsulated in a capsule according to the invention, if not already added in step (I), optionally other vulcanization accelerants and retardants, to yield the vulcanisable elastomeric compound (production step II). In the incorporation step (II), the temperature is generally kept lower than 140 °C and preferably lower than 120 °C, more preferably between 80 °C and 105 °C, in order to avoid any undesired pre-crosslinking phenomenon.

The vulcanisable elastomeric compound thus prepared is then typically used for the preparation of one or more components of a tyre, and can be vulcanised according to standard procedures.

The vulcanisation process of the present vulcanisable compound generally involves heating it to a temperature of at least 140 °C, for a time generally less than 30 minutes.

Typically the vulcanisation process is carried out in conventional moulds at a temperature of between 140 °C and 190 °C, preferably lower than 180 °C, more preferably lower than 175 °C.

Preferably, the vulcanisation process is carried out at a temperature of between 150 °C and 180 °C, more preferably between 150 °C and 160 °C.

Preferably, the vulcanisation process is carried out for a time of less than 20 minutes, more preferably less than 15 minutes.

Due to the incorporation of the accelerant (A) in the capsule according to the invention, the vulcanisation process of the present vulcanisable elastomeric compound reaches completion well before that of the corresponding vulcanisable compound comprising the same quantity of the same accelerant (A) but not encapsulated, or added as it is in the compound.

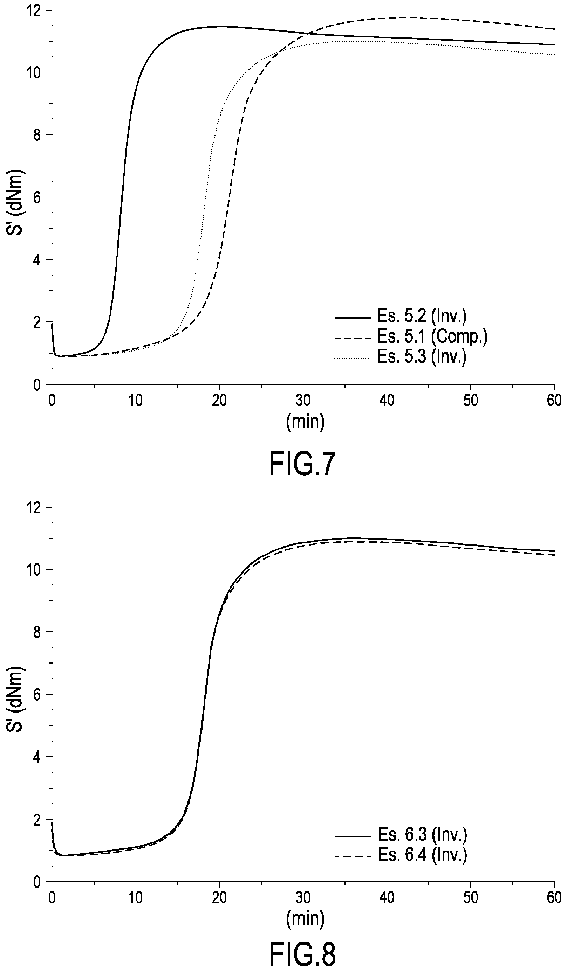

**In** particular, the vulcanisation process of the vulcanisable compound of the invention is characterized, under the same operating conditions, by a vulcanisation time (T-MH) generally at least 30% lower, preferably at least 40% lower, even more preferably at least 50% lower than the vulcanisation time of the corresponding compound having the same composition but in which the same amount of the same accelerant (A) has been added in the compound as it is, in an unencapsulated form. From the vulcanisation curves shown in Fig. 6 and 7 it is clear that the time **T-MH** necessary to reach 100% of the cross-linking of the compound according to the invention (Ex. 4.1, 5.2 and 5.3) comprising the present capsules, is much lower than that of the comparative compounds (Ex. 4.2, 4.3 and 5.1), wherein the accelerant (A) was added as it is or encapsulated in non-cross-linked capsules.

Finally from the trend of the initial part of the same curves it appears that the vulcanisation does not start too early, avoiding possible scalding problems.

A further aspect of the present invention is a component of a tyre comprising the vulcanisable compound of the invention (green component) or the vulcanised compound obtained by vulcanisation thereof (vulcanised component).

Preferably, the tyre component according to the invention consists of the vulcanisable compound according to the invention (green component) or of the vulcanised compound obtained by vulcanisation thereof (vulcanised component).

Preferably, the at least one tyre component according to the invention is selected from tread band, base-layer, anti-abrasive layer, sidewall, sidewall insert, mini-sidewall, under-liner, rubber layers, bead filler, flipper, chafer and sheet, more preferably it is selected from tread band, base-layer, under-liner, bead filler and sidewall insert.

A further aspect of the present invention is a tyre for vehicle wheels comprising at least one of the components indicated above.

Preferably, the tyre for vehicle wheels of the invention comprises at least one tyre component which consists of a vulcanisable elastomeric compound according to the invention (green component) or of a vulcanised elastomeric compound obtained by vulcanisation thereof.

In one embodiment, a tyre for vehicles according to the present invention comprises at least
- a carcass structure comprising at least a carcass ply having opposite lateral edges associated to respective bead structure;
- possibly a pair of sidewalls applied to the lateral surfaces of the carcass structure, respectively, in an axially outer position;
- possibly a belt structure applied in radially outer position with respect to the carcass structure;
- a tread band applied in a radially outer position to said carcass structure or, if present, a belt structure,
- possibly a layer of elastomeric material, referred to as base-layer, applied in a radially inner position with respect to said tread band,
wherein at least one component comprises, or preferably consists of, the elastomeric compound according to the invention.

An embodiment according to the present invention relates to a tyre for high performance vehicles (HP, SUV and UHP), wherein at least one component comprises, or preferably consists of, the elastomeric compound according to the invention.

An embodiment according to the present invention relates to a tyre for heavy vehicles in which at least one component, preferably selected from base-layer, sidewall and tread band, comprises, or preferably consists of, the elastomeric compound according to the invention.

The tyre according to the invention may be a tyre for two, three or four-wheeled vehicles.

The tyre according to the invention can be for summer or winter use or for all seasons.

In one embodiment, the tyre according to the invention is a tyre for bicycle wheels. A tyre for bicycle wheels typically comprises a carcass structure turned around a pair of bead cores at the beads and a tread band arranged in a radially outer position with respect to the carcass structure.

The carcass structure is intended to withstand the inflation pressure and to support the weight of the bicycle and the cyclist. It comprises one or more carcass plies, each comprising a plurality of suitably oriented reinforcement cords. In the case of several carcass plies, they are inclined with respect to each other to form a crossed structure.

The bead cores have the task of ensuring that the tyre is anchored to the wheel rim. In the radially inner position of the carcass structure, an air chamber may be provided in which pressurised air is introduced.

The tyre according to the present invention can be produced according to a process which comprises:
- building components of a green tyre on at least one forming drum;
- shaping, moulding and vulcanising the tyre;
wherein building at least one of the components of a green tyre comprises:
- manufacturing at least one green component comprising, or preferably consisting of, the vulcanisable elastomeric compound of the invention.

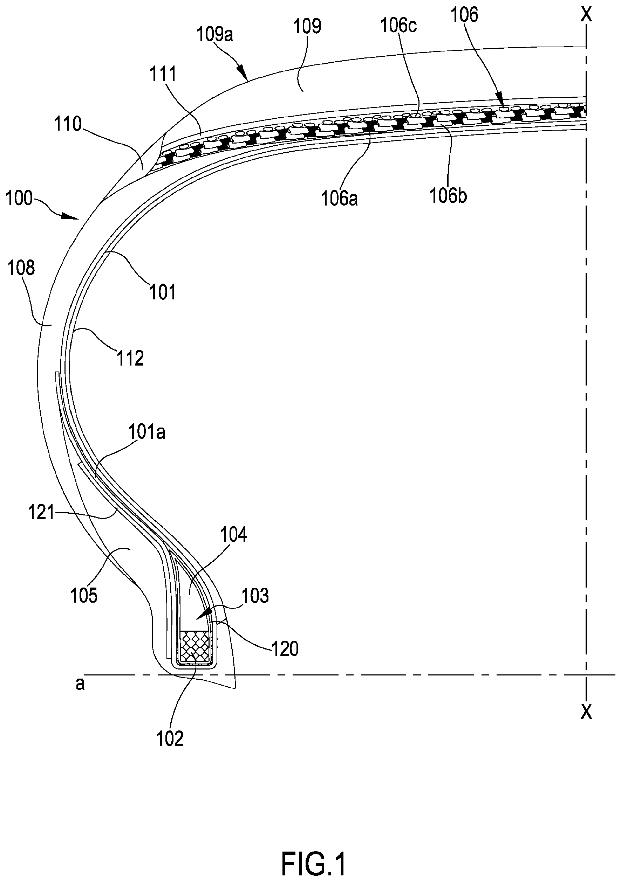

A tyre for vehicle wheels according to the invention, comprising at least one component comprising the present elastomeric compound, is illustrated in radial half-section in Figure 1.

In Figure 1, "a" indicates an axial direction and "X" indicates a radial direction, in particular X-X indicates the outline of the equatorial plane. For simplicity, Figure 1 shows only a portion of the tyre, the remaining portion not shown being identical and arranged symmetrically with respect to the equatorial plane "X-X".

Tyre 100 for four-wheeled vehicles comprises at least one carcass structure, comprising at least one carcass layer 101 having respectively opposite end flaps engaged with respective annular anchoring structures 102, referred to as bead cores, possibly associated to a bead filler 104.

The tyre area comprising the bead core 102 and the filler 104 forms a bead structure 103 intended for anchoring the tyre onto a corresponding mounting rim, not shown. The carcass structure is usually of radial type, i.e. the reinforcement elements of the at least one carcass layer 101 lie on planes comprising the rotational axis of the tyre and substantially perpendicular to the equatorial plane of the tyre. Said reinforcement elements generally consist of textile cords, such as rayon, nylon, polyester (for example polyethylene naphthalate, PEN). Each bead structure is associated to the carcass structure by folding back of the opposite lateral edges of the at least one carcass layer 101 around the annular anchoring structure 102 so as to form the so-called carcass flaps 101A as shown in Figure 1.

In one embodiment, the coupling between the carcass structure and the bead structure can be provided by a second carcass layer (not shown in Figure 1) applied in an axially outer position with respect to the first carcass layer.

An anti-abrasive strip 105 optionally made with an elastomeric compound is arranged in an outer position of each bead structure 103.

The carcass structure is associated to a belt structure 106 comprising one or more belt layers 106°, 106b placed in radial superposition with respect to one another and with respect to the carcass layer, having typically textile and/or metallic reinforcement cords incorporated within a layer of vulcanised elastomeric compound.

Such reinforcement cords may have crossed orientation with respect to a direction of circumferential development of tyre 100. By "circumferential" direction it is meant a direction generally facing in the direction of rotation of the tyre.

At least one zero-degree reinforcement layer 106c, commonly known as a "0° belt", may be applied in a radially outermost position to the belt layers 106°, 106b, which generally incorporates a plurality of elongated reinforcement elements, typically metallic or textile cords, oriented in a substantially circumferential direction, thus forming an angle of a few degrees (such as an angle of between about 0° and 6°) with respect to a direction parallel to the equatorial plane of the tyre, and coated with vulcanised elastomeric compound.

A tread band 109 of vulcanised elastomeric compound is applied in a position radially outer to the belt structure 106.

Moreover, respective sidewalls 108 of vulcanised elastomeric compound are applied in an axially outer position on the lateral surfaces of the carcass structure, each extending from one of the lateral edges of tread 109 at the respective bead structure 103.

In a radially outer position, the tread band 109 has a rolling surface 109° intended to come in contact with the ground. Circumferential grooves, which are connected by transverse notches (not shown in Figure 1) so as to define a plurality of blocks of various shapes and sizes distributed over the rolling surface 109°, are generally made on this surface 109°, which for simplicity is represented smooth in Figure 1. A base-layer 111 of vulcanised elastomeric compound can be arranged between the belt structure 106 and the tread band 109.

A strip consisting of elastomeric compound 110, commonly known as "mini-sidewall", of vulcanised elastomeric compound can optionally be provided in the connecting zone between sidewalls 108 and the tread band 109, this mini-sidewall generally being obtained by co-extrusion with the tread band 109 and allowing an improvement of the mechanical interaction between the tread band 109 and sidewalls 108. Preferably, the end portion of sidewall 108 directly covers the lateral edge of the tread band 109.

In the case of tubeless tyres, a rubber layer 112, generally known as "liner", which provides the necessary impermeability to the inflation air of the tyre, can also be provided in a radially inner position with respect to the carcass layer 101.

The rigidity of the tyre sidewall 108 can be improved by providing the bead structure 103 with a reinforcing layer 120 generally known as flipper or additional strip-like insert.

Flipper 120 is a reinforcing layer which is wound around the respective bead core 102 and the bead filler 104 so as to at least partially surround them, said reinforcing layer being arranged between the at least one carcass layer 101 and the bead structure 103. Usually, the flipper is in contact with said at least one carcass layer 101 and said bead structure 103.

Flipper 120 typically comprises a plurality of textile cords incorporated within a layer of vulcanised elastomeric compound.

The bead structure 103 of the tyre may comprise a further protective layer which is generally known by the term of chafer 121 or protective strip and which has the function of increasing the rigidity and integrity of the bead structure 103.

Chafer 121 usually comprises a plurality of cords incorporated within a rubber layer of vulcanised elastomeric compound. Such cords are generally made of textile materials (such as aramide or rayon) or metal materials (such as steel cords).

A layer or sheet of elastomeric compound can be arranged between the belt structure and the carcass structure. The layer can have a uniform thickness. Alternatively, the layer may have a variable thickness in the axial direction. For example, the layer may have a greater thickness close to its axially outer edges with respect to the central (crown) zone.

Advantageously, the layer or sheet can extend on a surface substantially corresponding to the extension surface of said belt structure.

In a preferred embodiment, a layer of elastomeric compound, referred to as base-layer, can be placed between said belt structure and said tread band, said base-layer preferably extending on a surface substantially corresponding to the extension surface of said belt structure.

The elastomeric compound according to the present invention can advantageously be incorporated in one or more of the above tyre components.

According to an embodiment not shown, the tyre may be a tyre for motorcycle wheels which is typically a tyre that has a straight section featuring a high tread camber.

According to an embodiment not shown, the tyre may be a tyre for bicycle wheels. According to an embodiment not shown, the tyre may be a tyre for heavy transport vehicle wheels, such as trucks, buses, trailers, vans, and in general for vehicles in which the tyre is subjected to a high load. Preferably, such a tyre is adapted to be mounted on wheel rims having a diameter equal to or greater than 17.5 inches for directional or trailer wheels.

### EXPERIMENTAL PART

The description of some preparative examples according to the invention or comparative examples, given only for illustrative and non-limiting of the scope if the invention, is set out below.

### ANALYSIS METHODS

The ATR-FTIR analysis was performed with a Perkin Elmer Spectrum 100 instrument through reflected signal (Attenuated Total Reflection - ATR), spectra with a resolution of 1 cm⁻¹, region from 650 to 4000 cm⁻¹, 16 scans, detector: Deuterium triglycine sulphate (DTGS) or triglycine sulphate (TGS). (Figures 2 and 3).

The following procedure was followed:
- set FTIR according to the procedure described in the instruction manual;
- measure the base spectrum under the conditions listed above,
- place the sample being analysed on the ATR crystal, completely in contact with the surface of the crystal,
- measure the spectrum according to the above conditions,
- subtract the base spectrum from that of the sample.

The cross-linked capsules in which all the epoxy groups had reacted did not show the characteristic vibration signal of these groups around 1474 cm⁻¹.

Microscopic observation (SEM): Tescan VEGA TS5136XM device, detector: BSE detector, 1.89 kx magnification. This technique allows observing the present capsules inside the vulcanisable elastomeric compounds of the invention.

The samples were prepared according to the following procedure:
- the surface of the standard sample holder (disk diameter size 1 cm) is made adhesive with a conductive double-sided layer;
- the powder object of the analysis, obtained by freezing at - 60 °C by immersion of the vulcanisable compound in liquid nitrogen and subsequent pulverisation in an ultra-centrifugal mill (Retsch ZM 200 at 10,000 rpm), is deposited homogeneously on the conductive double-sided tape, so as to completely cover the surface (from 100 to 10 mg of powder) by mechanically removing excess dust;
- a thin conductive film is deposited on the sample surface (cathodic spraying technique, Mini Sputter Coater EMS 7620 instrument) in order to make the sample electrically conductive;
- insertion of the sample holder obtained inside the sample holder chamber of the instrument;
- acquisition of images following the instructions in the manual.

### Determination of the melting degree of the capsules and of the softening start temperature (graph of Figure 5)

The heating behaviour of samples of a cross-linked capsule according to the invention, a comparative non-cross-linked capsule and the accelerant TBBS (A) as such was evaluated.

For this analysis, an automated Buchi M-565 melting point apparatus (0.5 °C/min., standard deviation 0.03 °C) was used. The instrument measures the melting point on the basis of the light diffused by the sample inserted in a capillary and subjected to direct illumination via white LED light. In particular, the melting degree of the sample (expressed as a percentage) is correlated with the intensity of the reflected light which decreases with the increase of the liquid fraction compared to the solid one. In the case of a sample that does not melt, but shrinks as in the case of the cross-linked capsules of the invention, the intensity of the reflected light decreases anyway with increasing temperature but in a much less clear way than it happens in the case of a melting.

Figure 5 shows how both the non-cross-linked capsules and the pure TBBS showed a clear variation in the intensity of light reflected at the melting temperature of the TBBS. The cross-linked sample, on the other hand, showed a modest variation of reflected and distributed light over a wide temperature range, characteristic of a sample that shrinks but does not melt.

The start of the variation of reflected light corresponds to the softening start temperature which, for the cross-linked capsules according to the invention (Ex. 1B), was about 123-124 °C.

MDR rheometric analysis (according to ISO 6502): a rheometer Alpha Technologies type MDR2000 was used. The tests were carried out at 151°C for 60 minutes at an oscillation frequency of 1.66 Hz (100 oscillations per minute) and an oscillation amplitude of ± 0.5°, measuring the time necessary to achieve 100% (T-MH) of the maximum torque value (MH). The maximum torque value MH and the minimum torque value ML were also measured and their difference was calculated (MH-ML).

### EXAMPLE 1

### Preparation of capsules according to the invention and comparative (Ex. 1A-1C)

In a 5 l laboratory reactor, a solution of 160 g of Nt-butyl-2-benzothiazilsulfenamide (TBBS, Sigma Aldrich) and 160 g of ethyl cellulose (EC, Sigma Aldrich, viscosity 300 cP, 5% in toluene/ethanol 80:20, 48% ethoxy) in ethyl acetate (1.4 l) was prepared.

36 g of polyvinyl alcohol (PVA 8-88) dissolved in 3.6 l of water were added to the solution at room temperature. To homogenise the reaction mixture, an IKA Ultra-Turrax t25 basic homogeniser with dispersing elements S25N-25F was used.

16 g of trimethylolpropene triglycidyl ether (TMPGE Sigma Aldrich, 10% by weight with respect to EC) were slowly added dropwise to the emulsion, under stirring overnight, with an initial increase in the viscosity of the solution, due to the partial cross-linking of the EC by the TMPGE.

The mixture is left under stirring overnight in an open container to facilitate the evaporation of the organic solvent. The resulting dispersion was centrifuged in a Sigma 3-16k centrifuge, at 6000 rpm for 45 min. at 25 °C to obtain as residue the non-cross-linked capsules which were dried in an oven under vacuum at 50 mm Hg, at 50 °C for 24 h. The capsules thus obtained were divided into three aliquots. Two were cross-linked by heating in an oven for 10 hours at 120 °C and 90 °C respectively, supplying the cross-linked capsules according to the invention (Ex. 1A and Ex. 1B).

The third aliquot was kept at room temperature to avoid cross-linking (comparative capsules Ex. 1C). These comparative capsules are comparable to those prepared in the prior art, for example in US6984450.

The cross-linking progress was followed by IR spectroscopy, as shown in Figures 2 and 3 and as described herein in the analytical methods section.

Figure 2 highlights the signal at 1475 cm⁻¹ characteristic of the unreacted epoxy groups of the TMPGE (circled). In Figure 3 the presence and then the gradual disappearance of this epoxy signal can be observed initially as the cross-linking proceeds.

### EXAMPLE 2

### Capsule preparation Ex. 1 (reverse addition)

In a 5 l laboratory reactor, a solution of PVA (36 g) in water (3.6 l) (aqueous phase) was prepared and under homogenisation was slowly added a solution of 160 g of Nt-butyl-2-benzothiazilsulfenamide (TBBS, Sigma Aldrich), 160 g of ethylcellulose (EC, Sigma Aldrich, viscosity 300 cP, 5% in toluene/ethanol 80:20, 48% ethoxyls) and 16 g of trimethylolpropene triglycidyl ether (TMPGE Sigma Aldrichrich) in ethyl acetate (1.4 l) (organic phase) previously left under stirring at room temperature for 18 hours.

The mixture was homogenised at room temperature for 10 minutes and then stirred with a mechanical stirrer, again at room temperature until the organic solvent evaporated. The colloidal dispersion thus obtained was then centrifuged with a Sigma 3-16k centrifuge, at 6000 rpm for 45 min at 25 °C and dried in an oven under vacuum at 50 mm Hg, at 50 °C for 24 h, providing a powder of non-cross-linked capsules. The powder thus obtained was then heated in an oven at 120 °C for 10 hours to complete the cross-linking, thus providing the cross-linked capsules of the invention.

### Thermal stability of the capsules

The thermal stability of the cross-linked ethyl cellulose capsules prepared in Ex. 1B according to the invention containing TBBS was verified with respect to identical but non-cross-linked capsules (Ex. 1C).

The capsules were placed in Petri dishes and heated for 24 hours in an oven at 120 °C.

As can be seen from the photographs in Figure 4, while the non-cross-linked comparative capsules of Ex. 1C flaked completely after the melting of the TBBS, which occurred between 105 °C and about 110 °C (see the samples 1C before - on the left - and after heating - on the right), those cross-linked according to the invention of Ex. 1B maintained their shape and did not flake (samples 1B).

The trend of the melting of TBBS as is, not encapsulated, of capsules comprising cross-linked TBBS of the invention was also evaluated (Ex. 1B) and non-cross-linked comparative (Ex. 1C) by heating from 80 °C to 180 °C in a Büchi melting point m-565 appliance.

As can be seen from the melting degree diagram of Figure 5, the comparative non-cross-linked capsules (Ex. 1C) were already flaking at the melting temperature of the TBBS, completely freeing the encapsulated accelerant. Instead in the case of the cross-linked capsules of the invention (Ex. 1B) at the same temperatures and well beyond, no significant collapse phenomenon occurred. By contrast, the trend of the diagram showed that at least 70-80% of the capsules according to the invention had not yet flaked at 140 °C and that even at a temperature of 160 °C, their degradation was not yet completed.

These observations confirmed the remarkable thermal stability of the present cross-linked capsules.

### EXAMPLE 3

### Preparation of a mixture of TBBS, EC and TMPGE (comparative)

A mixture of TBBS, EC and TEMPGE was prepared, in a weight ratio of 1:1:0.1, dissolving the components in dichloromethane and then evaporating the solvent at the rotavapor at 30 °C for 30 min (comparative sample Ex. 3).

### EXAMPLE 4

### Preparation of elastomeric compounds comprising butadiene rubber and styrene-butadiene in a 3/7 mixture

This example aimed to evaluate the effect of TBBS microencapsulation on the vulcanisation kinetics of a compound comprising butadiene rubber and styrene-butadiene rubber in a 3/7 ratio.

In particular, all other conditions being equal, the vulcanisation trend was monitored in this type of compounds comprising cross-linked TBBS capsules according to the invention (Ex. 1A), comparative non-cross-linked TBBS capsules (e.g. 1C) or the simple mixture of the TBBS/EC/TMPGE ingredients (Ex. 3 comparative).

The elastomeric compounds of Examples 4.1 - 4.3 were prepared according to the methods described herein. The quantities of the various components are indicated in phr and shown in the following Table 1:

**Table 1**

| Step | Ingredients | Inv. 4.1 | Comp. 4.2 | Comp. 4.3 |
|---|---|---|---|---|
| 1-0 | BUNA CB 25 | 70 | 70 | 70 |
| 1-1 | Capsule of the invention Ex. 1A (cross-linked at 120 °C) | 5.7 | -- | -- |
| 1-1 | Comparative capsules Ex. 1C (non-cross-linked) | -- | 5.7 | -- |
| 1-1 | Comparative mixture TBBS /EC/ TMPGE Ex. 3 | -- | -- | 5.7 |
| 2-0 | SBR 2525 | 30 | 30 | 30 |
| 2-1 | Zinc octoate | 4 | 4 | 4 |
| 2-1 | DPG | 1 | 1 | 1 |
| 2-1 | Sulphur | 2 | 2 | 2 |

wherein
BUNA CB 25 is a butadiene rubber with a high cis content (97.5%), polymerised with neodymium, from ARLANXEO,
SBR is a styrene-butadiene copolymer, marketed under the name Europrene 1500 by Versalis,
Zinc octoate: it is 75% zinc 2-ethylhexanoate (CAS n. 85203-81-2) supported on silica (25%), STRUKTOL ZEH 75 by SCHILL & SEILACHER,
DPG: is the accelerant diphenylguanidine 80% CAS: 102-06-7, 20% of binding polymer and dispersing agents, commercial name PREMIX DPG violet 80% by RDC,
Sulphur: amorphous sulphur, insoluble in CS₂ and in toluene. Treated with 33% hydrotreated heavy naphthenic distillate (petroleum), trade name Crystex OT33 from EASTMAN.

The mixing was carried out in several steps using the same internal Thermo Haake Reomix laboratory tangential rotor mixer (250 ml mixing chamber).

The concentrated butadiene-based masterbatch (steps 1-0 and 1-1) was then prepared, then diluting the same in a styrene-butadiene rubber (step 2-0) and finally completing the preparation with the remaining ingredients in the quantities and in the order indicated in Table 1.

In particular, in the first step (1-0), butadiene rubber was introduced and processed for 30 seconds at 60 °C (set temperature).

In the following step (1.1) the accelerant (A) was added in the forms indicated in Table 1 (Ex. 1A, and Ex. 1C and Ex. 3) and the mixing was continued for 2 minutes, until reaching 120 °C ± 5 °C, then unloading the three masterbatches.

In the following step (2-0) SBR rubber was added and the mixing continued for about 2 minutes, achieving 125 °C ± 5 °C.

After 24 hours in the following step (2-1) the vulcanising agent (Sulphur), the activating agent (Zinc octoate) and the other accelerant (DPG) were introduced, mixing for about 2 minutes, until reaching 95 °C ± 5 °C, when the compounds were unloaded.

The elastomeric compounds of Examples 4.1 - 4.3 prepared above were evaluated for the vulcanisation behaviour (at 151 °C, 60 min) by rheometric analysis and the torque measurements shown in the graph in Figure 6 and in Table 4.

From this graph it was shown that the behaviour of the compound comprising the cross-linked capsules according to the invention (Ex. 4.1) was very different compared to the compound comprising the non-cross-linked capsules (Ex. 4.2) or the reference one, including the non-encapsulated mixed ingredients (Ex. 4.3).

In fact, the curves relating to the compounds of the comparative Ex. 4.2 and 4.3 were very close and similar, while the curve related to the compound of Ex. 4.1 according to the invention appeared decidedly displaced, with vulcanisation times (T-MH) reduced by 65% with respect to the reference compound of Ex. 4.3, comprising the simple mixture of ingredients, and more than 50% compared to the compound of Ex. 4.2 comprising non-cross-linked capsules comparable to the known ones.

### EXAMPLE 5

### Preparation of elastomeric compounds comprising butadiene rubber and styrene-butadiene in a 3/7 mixture (capsules with different degrees of cross-linking)

This example aimed to evaluate the effect of TBBS microencapsulation in capsules with different degrees of cross-linking on the vulcanisation kinetics of a compound comprising butadiene rubber and styrene-butadiene rubber in a 3/7 ratio.

In particular, all other conditions being equal, the trend of the vulcanisation was compared in compounds comprising capsules of TBBS cross-linked at 120 °C according to the invention of Ex. 1A (Ex. 5.2), TBBS capsules cross-linked at 90 °C according to the invention of Ex. 1B (Ex. 5.3) and the TBBS/EC/TMPGE mixture of Ex. 3 (Ex. 5.1 comparative).

The elastomeric compounds of Examples 5.1 - 5.3 below were prepared as described in Example 4. The quantities of the various components are indicated in phr and shown in the following Table 2:

**Table 2**

| Step | Ingredients | Comp. 5.1 | Inv. 5.2 | Inv. 5.3 |
|---|---|---|---|---|
| | | | | |
| 1-0 | BR | 30.0 | 30.0 | 30.0 |
| 1-0 | Comp. Mixture (TBBS/EC/TMPGE) Ex. 3 | 5.7 | | |
| 1-0 | Capsules inv. (cross-linked at 120 °C) Ex. 1A | -- | 5.7 | -- |
| 1-0 | Capsules inv. (cross-linked at 90°C) Ex. 1B | -- | -- | 5.7 |
| 2-0 | SBR | 70.0 | 70.0 | 70.0 |
| 2-1 | Zinc octoate | 4.0 | 4.0 | 4.0 |
| 2-1 | DPG | 1.0 | 1.0 | 1.0 |
| 2-1 | SULPHUR | 2.0 | 2.0 | 2.0 |

wherein
TBBS/EC/TMPGE mix is the mixture of N-tert-butyl-2-benzotiazol-sulfenamide, ethyl cellulose, trimethylolpropene triglycidyl ether of Ex. 3 (non-encapsulated); and the other ingredients are the same as those shown in Table 1.

The elastomeric compounds of Examples 5.1 - 5.3 were evaluated for the vulcanisation behaviour (at 151 °C, 60 min) and the torque measurements shown in the graph in Figure 7. Table 4 shows the values of ML, MH and T-MH.

From this graph it was observed that capsules cross-linked at different temperatures (see Ex. 5.2 cross-linking at 120 °C vs Ex. 5.3 at 90 °C) led to different vulcanisation kinetics and that the capsules cross-linked at 120 °C (Ex. 5.2) gave rise to faster kinetics.

The capsules cross-linked at 90 °C according to the invention (Ex. 5.3) resulted in vulcanisation times lower than the times measured in the case of the simple mixture of TBBS/EC/TMPGE (Ex. 5.1) even if higher than those of the sample according to the invention cross-linked at 120 °C (Ex. 5.2).

### EXAMPLE 6

### Preparation of elastomeric compounds comprising butadiene rubber and styrene-butadiene in a 3/7 mixture (different concentrated masterbatches)

This example aimed to evaluate the effect on the vulcanisation kinetics of the incorporation of the capsules according to the invention into different concentrated masterbatches, subsequently diluted to give final compounds with the same composition.

The TBBS capsules cross-linked at 90 °C of Ex. 1B according to the invention were incorporated in butadiene rubber or in butadiene-styrene rubber, yielding the concentrated masterbatches of Ex. 6.1 - 6.2, as shown in the following Table 3:

**Table 3 (phr)**

| Step | Concentrated masterbatches | Ex. 6.1 | Ex. 6.2 |
|---|---|---|---|
| 1-0 | BR | 30.00 | -- |
| 1-0 | Capsule of the invention Ex. 1B (cross-linked at 90 °C) | 5.70 | 5.70 |
| 1-0 | SBR | -- | 70.00 |

| | Vulcanisable compounds | Ex. 6.3 (Inv.) | Ex. 6.4 (Inv.) |
|---|---|---|---|
| 2-0 | BR | -- | 30.00 |
| 2-0 | SBR | 70.00 | -- |
| 2-1 | ZINC OCTOATE | 4.00 | 4.00 |
| 2-1 | DPG | 1.00 | 1.00 |
| 2-1 | SULPHUR | 2.00 | 2.00 |

wherein
the ingredients have the same meaning shown in Table 2.

The concentrated masterbatches of Ex. 6.1 - 6.2 were mixed in a second step with the other components listed in the second part of the same Table 3 following the procedure described in Example 4, thus providing the compounds of Ex. 6.3 and 6.4 according to the invention.

The elastomeric compounds of Examples 6.3 - 6.4 were evaluated for the vulcanisation behaviour (at 151 °C, 60 min) and the torque measurements shown in the graph in Figure 8.

From this graph it was observed that the incorporation of the cross-linked capsules according to the invention in butadiene-based or styrene-butadiene-based masterbatches, rubbers with very different solubilisation features, had little influence on the vulcanisation kinetics of the corresponding samples. In fact, the vulcanisation curves of the samples of Ex. 6.3 and 6.4 appeared substantially superimposable.

### Rheological properties of the compounds

The rheological properties of the compounds are summarised in the following Table 4:

**Table 4**

| Ex. | | ML dNm | MH dNm | T-MH min. |
|---|---|---|---|---|
| 4.1 | Inv. | 1 | 11 | 18 |
| 4.2 | Comp. | 1 | 12 | 35 |
| 4.3 | Comp. | 1 | 12 | 45 |
| 5.1 | Comp. | 1 | 12 | 40 |
| 5.2 | Inv. | 1 | 12 | 14 |
| 5.3 | Inv. | 1 | 11 | 35 |
| 6.3 | Inv. | 1 | 11 | 33 |
| 6.4 | Inv. | 1 | 11 | 33 |

wherein
MH (maximum torque): is the torque measured when cross-linking can be considered complete;
MH-ML: difference between maximum torque MH and minimum torque ML;
T-MH: it is the time necessary to reach the complete cross-linking of the sample. As can be seen from the values of T-MH, the compounds according to the invention all vulcanised much more rapidly than the comparative ones.

Finally, by observing the trend of the vulcanisation curves of the samples according to the invention (Figures 6 - 8), it was noted that a satisfactory vulcanisation triggering time or scalding time was evident, indicating the absence of scalding of the compound.

## Claims

1. A capsule comprising a coating and a core, wherein
the coating comprises at least one cross-linked polymer obtained by cross-linking at least one cross-linkable polymer selected from cellulose derivatives, starch and derivatives, chitosans, alginates, polyesters, phenol-formaldehyde resins, anhydrides derivatised NR, NBR or EPDM rubbers with at least one cross-linking agent selected from among
the products having two or more epoxy groups, carboxylic groups, possibly activated as acyl halides or as esters, aldehyde groups, isocyanate groups, hydroxyl groups, halogens,
the products of formula (I)
Q(OR)₄ (I)
where Q is Sn, Si, Pb, Ge, Ti or, Zr, and R is C1-C4 alkyl,
the inorganic products of Zr, Ti and Sn,
the boron products such as boric acid and salts thereof,
the aluminium products of formula (II)
Al(NO₃)₃, Al₂(SO₄)₃ or M Al(SO₄)₂ (II)
wherein M is potassium or sodium and wherein the core comprises at least one thermolabile vulcanisation accelerant (A) having a melting point lower than 140°C.

2. The capsule according to claim 1 wherein said at least one cross-linkable polymer is a cellulose derivative selected from among ethylcellulose, cellulose acetate, 2-hydroxyethylcellulose, cellulose acetate butyrate, cellulose acetate phthalate, cellulose cyanoethylate, methylcellulose, hydroxypropyl cellulose, sodium carboxymethylcellulose, hydroxypropylmethyl cellulose and methyl 2-hydroxyethyl cellulose.

3. The capsule according to any one of the preceding claims wherein said at least one thermolabile vulcanisation accelerant (A) is selected from among xanthates, dithiocarbamates, thiurams, thiazol derivatives, sulphenamides, guanidines and thiourea derivatives, preferably from among sulphenamides.

4. The capsule according to any one of the preceding claims wherein said at least one thermolabile vulcanisation accelerant (A) is selected from among tetramethylthiuram monosulphide (TMTM), tetramethylthiuram disulphide, benzothiazyl-2-sulfene morpholide (MBS), benzothiazyl-2-cyclohexyl-sulfenamide (CBS), benzothiazyl-2-tert.-butyl-sulfenamide (TBBS), benzothiazyldicyclohexyl sulphenamide (DCBS), diphenyl guanidine (DPG), diorthotolyl guanidine (DOTG), o-tolylbiguanide (OTBG), zinc-N-dimethyl-dithiocarbamate (ZDMC), zinc-N-diethyldithiocarbamate (ZDEC), zinc-N-dibutyl-dithiocarbamate (ZDBC), zinc-N-ethylphenyldithiocarbamate (ZEBC), zinc-N-pentamethylene dithiocarbamate (ZPMC), ethylenethiourea (ETU), diethylthiourea (DETU), diphenylthiourea (DPTU), preferably it is TBBS.

5. The capsule according to any one of the preceding claims which comprises 10% to 80% by weight of the at least one thermolabile vulcanisation accelerant (A) and 90% to 20% by weight of coating, with respect to the overall weight of the capsule.

6. A process in emulsion for preparing the capsules according to any one of the claims 1 to 5 which comprises
- providing a solution of at least one cross-linkable polymer, selected from cellulose derivatives, starch and derivatives, chitosans, alginates, polyesters, phenol-formaldehyde resins, anhydrides derivatised NR, NBR or EPDM rubbers, at least one thermolabile vulcanisation accelerant (A) having a melting point lower than 140°C and, possibly, at least one cross-linking agent, selected from among
the products having two or more epoxy groups, carboxylic groups, possibly activated as acyl halides or as esters, aldehyde groups, isocyanate groups, hydroxyl groups, halogens,
the products of formula (I)
Q(OR)₄ (I)
where Q is Sn, Si, Pb, Ge, Ti or, Zr, and R is C1-C4 alkyl,
the inorganic products of Zr, Ti and Sn,
the boron products such as boric acid and salts thereof,
the aluminium products of formula (II)
Al(NO₃)₃, Al₂(SO₄)₃ or M Al(SO₄)₂ (II)
wherein M is potassium or sodium, in at least one suitable organic solvent immiscible with water (organic phase), wherein said organic solvent immiscible with water is selected from among chlorinated solvents, aromatic and aromatic halides solvents, aliphatic hydrocarbons, esters, ethers and mixtures thereof,
- providing an aqueous phase,
- providing at least one non-ionic surfactant, possibly dissolved in said aqueous phase,
- mixing together said organic phase, said aqueous phase and said at least one surfactant up to providing an emulsion,
- adding to the emulsion, if not already present, the at least one cross-linking agent,
- allowing the emulsion to react, preferably under stirring, in order to produce non-cross-linked capsules,
- isolating the non-cross-linked capsules from the emulsion, and
- subjecting the capsules to cross-linking by heating.

7. The process according to claim 6 wherein
- said organic solvent immiscible with water is used in a weight ratio from 50:1 to 0.5:1, preferably from 20:1 to 0.7:1, more preferably from 10:1 to 1:1, even more preferably from 5:1 to 1:1, with respect to the overall weight of the accelerant (A) and of the cross-linkable polymer;
- said cross-linkable polymer and said thermolabile vulcanisation accelerant (A) are present in a weight ratio comprised between 10:1 and 0.1:1, preferably between 7:1 and 0.3:1, more preferably between 5:1 and 0.5:1, even more preferably around 1:1;
- said cross-linking agent is present in a percentage by weight comprised between 1% and 15%, preferably between 5% and 15%, more preferably between 8% and 12%, even more preferably around 10% by weight with respect to the cross-linkable polymer;
- said surfactant is present in a percentage by weight comprised between 0.2% and 10% by weight, preferably between 0.5% and 5% by weight, more preferably between 0.8% and 2% by weight with respect to the weight of water; and
- the weight ratio between water and organic solvent immiscible with water is comprised between 10:1 and 0.1:1, more preferably between 5:1 and 0.5:1, even more preferably between 4:1 and 2:1.

8. The process according to any one of the claims 6 or 7 wherein:
- the cross-linkable polymer is a cross-linkable cellulose derivative,
- the thermolabile vulcanisation accelerant (A) is a sulphenamide,
- the cross-linking agent is a di- or triepoxide.

9. The process according to any one of the claims 6 to 8 wherein the non-ionic surfactant is selected from among polyvinylalcohols, ethoxylated sorbitan derivatives, sorbitan esters, polyethoxylated castor oils, alkylpolyethyleneglycols, polyoxyethylene ethers and mixtures thereof.

10. The process according to any one of the claims 6 to 9 wherein the cross-linking of the non-cross-linked capsules is carried out by means of their heating from 70 °C to 150 °C, for a period of 5 to 20 hours.

11. A capsule obtainable according to the process of any one of the claims 6 to 10.

12. An elastomeric composition for tyres comprising at least
0.1 to 20 phr of at least one thermolabile vulcanisation accelerant (A) having a melting point lower than 140°C encapsulated in a capsule according to any one of the claims 1 to 5 or 11,
100 phr of at least one diene elastomeric polymer (B),
0 to 120 phr of at least one reinforcing filler (C), and
0.1 to 15 phr of at least one vulcanising agent (D).

13. The elastomeric composition as claimed in claim 12, wherein
- the at least one diene elastomeric polymer (B) is selected from cis-1,4-polyisoprene, 3,4-polyisoprene, polybutadiene, optionally halogenated isoprene/isobutene copolymers, 1,3-butadiene/acrilonitrile copolymers, styrene/1,3-butadiene copolymers, styrene/isoprene/1,3-butadiene copolymers, styrene/1,3-butadiene/acrylonitrile copolymers and mixtures thereof;
- the at least one reinforcing filler (C), if present, is selected from among carbon black, conventional silica, such as silica from sand precipitated with strong acids, preferably amorphous, diatomaceous earth, calcium carbonate, titanium dioxide, talc, alumina, aluminosilicates, kaolin, silicate fibres and mixtures thereof; and
- the at least one vulcanising agent (D) is selected from among sulphur or molecules containing sulphur (sulphur donors) such as caprolactam disulphide (CLD), bis[(trialkoxysilyl)propyl]polysulphides, dithiophosphates, phosphorylpolysulphide (SDT) and mixtures thereof, preferably it is sulphur.

14. A vulcanisable elastomeric compound for tyres, obtained by mixing and possible heating of the components of the elastomeric composition for tyres according to one of the claims 12 or 13 or a vulcanised elastomeric compound obtained by the vulcanisation thereof.

15. The compound according to claim 14 **characterised by** a vulcanisation time of less than 20 minutes, measured according to ISO6502 at 151 °C.

16. A process for preparing a vulcanisable elastomeric compound for tyres according to claims 14 or 15, said process comprising one or more steps of mixing at least one thermolabile vulcanisation accelerant (A) having a melting point lower than 140°C encapsulated in a capsule according to any one of the claims 1 to 5 or 11, at least one diene elastomeric polymer (B), at least one reinforcing filler (C) and at least one vulcanising agent (D).

17. The process according to claim 16 wherein after the addition of said at least one thermolabile vulcanisation accelerant (A), the temperature of the compound being mixed does not exceed 140 °C, preferably it does not exceed 120 °C.

18. The process according to one of the claims 16 or 17, which comprises
- a mixing step (1) which comprises mixing and possibly heating to a mixing temperature between 120 °C and 160 °C, in at least one suitable mixer:
- at least one elastomeric polymer (B),
- at least one reinforcing filler (C), and
optionally, at least one thermolabile vulcanisation accelerant (A) encapsulated in a capsule according to any one of the claims 1 to 5 or 11, in such case maintaining the temperature lower than 140 °C,
to yield a non-vulcanisable elastomeric compound (m1);
- a mixing step (2) which comprises incorporating in the non-vulcanisable elastomeric compound (m1):
at least one vulcanising agent (D),
at least said one thermolabile vulcanisation accelerant (A) encapsulated in a capsule according to any one of the claims 1 to 5 or 11, if not already completely added in step (1), and
optionally, vulcanisation accelerant and/or retardant agents,
and mixing at a mixture temperature not higher than 120 °C, preferably not higher than 105 °C, to yield a vulcanisable elastomeric compound (m2); and
- a step of unloading (3) of the vulcanisable elastomeric compound (m2).

19. A tyre component comprising the vulcanisable compound according to one of the claims 14 or 15, or the vulcanised compound obtained by the vulcanisation thereof.

20. A tyre for vehicle wheels comprising at least one tyre component according to claim 19.

21. Use of the capsule according to any one of the claims 1 to 5 or 11, as accelerant of the vulcanisation of elastomeric compounds for tyres.

## Patentansprüche

1. Kapsel, umfassend eine Beschichtung und einen Kern, wobei
die Beschichtung mindestens ein vernetztes Polymer umfasst, das durch Vernetzung mindestens eines vernetzbaren Polymers ausgewählt aus Cellulosederivaten, Stärke und Derivaten, Chitosanen, Alginaten, Polyestern, Phenol-Formaldehyd-Harzen, Anhydrid-derivatisierten NR-, NBR- oder EPDM-Kautschuken mit mindestens einem Vernetzungsmittel ausgewählt aus
den Produkten mit zwei oder mehr Epoxygruppen, Carboxylgruppen, gegebenenfalls aktiviert als Acylhalogenide oder als Ester, Aldehydgruppen, Isocyanatgruppen, Hydroxylgruppen, Halogenen, den Produkten der Formel (I)
Q(OR)₄ (I)
wobei Q Sn, Si, Pb, Ge, Ti oder Zr ist und R C1-C4-Alkyl ist,
den anorganischen Produkten von Zr, Ti und Sn,
den Borprodukten wie Borsäure und Salze davon,
den Aluminiumprodukten der Formel (II)
Al(NO₃)₃, Al₂(SO₄)₃ oder M Al(SO₄)₂ (II),
wobei M Kalium oder Natrium ist und wobei der Kern mindestens einen thermolabilen Vulkanisationsbeschleuniger (A) mit einem Schmelzpunkt unter 140 °C umfasst.

2. Kapsel nach Anspruch 1, wobei das mindestens eine vernetzbare Polymer ein Cellulose-Derivat ist, das ausgewählt ist aus Ethylcellulose, Celluloseacetat, 2-Hydroxyethylcellulose, Celluloseacetatbutyrat, Celluloseacetatphthalat, Cellulosecyanoethylat, Methylcellulose, Hydroxypropylcellulose, Natriumcarboxymethylcellulose, Hydroxypropylmethylcellulose und Methyl-2-hydroxyethylcellulose.

3. Kapsel nach einem der vorstehenden Ansprüche, wobei der mindestens eine thermolabile Vulkanisationsbeschleuniger (A) ausgewählt ist aus Xanthaten, Dithiocarbamaten, Thiuramen, Thiazolderivaten, Sulphenamiden, Guanidinen und Thioharnstoffderivaten, vorzugsweise aus Sulphenamiden.

4. Kapsel nach einem der vorstehenden Ansprüche, wobei der mindestens eine thermolabile Vulkanisationsbeschleuniger (A) ausgewählt ist aus Tetramethylthiurammonosulfid (TMTM), Tetramethylthiuramdisulfid, Benzothiazyl-2-sulfen-morpholid (MBS), Benzothiazyl-2-cyclohexyl-sulfenamid (CBS), Benzothiazyl-2-tert.-butyl-sulfenamid (TBBS), Benzothiazyldicyclohexylsulfenamid (DCBS), Diphenylguanidin (DPG), Diorthotolylguanidin (DOTG), o-Tolylbiguanid (OTBG), Zink-N-dimethyl-dithiocarbamat (ZDMC), Zink-N-diethyldithiocarbamat (ZDEC), Zink-N-dibutyl-dithiocarbamat (ZDBC), Zink-N-ethylphenyldithiocarbamat (ZEBC), Zink-N-pentamethylen-dithiocarbamat (ZPMC), Ethylenthioharnstoff (ETU), Diethylthioharnstoff (DETU), Diphenylthioharnstoff (DPTU), vorzugsweise ist es TBBS.

5. Kapsel nach einem der vorstehenden Ansprüche, die 10 bis 80 Gew.-% des mindestens einen thermolabilen Vulkanisationsbeschleunigers (A) und 90 bis 20 Gew.-% Beschichtung, bezogen auf das Gesamtgewicht der Kapsel, umfasst.

6. Emulsionsverfahren zur Herstellung der Kapseln nach einem der Ansprüche 1 bis 5, welches umfasst
- Bereitstellen einer Lösung von mindestens einem vernetzbaren Polymer, ausgewählt aus Cellulosederivaten, Stärke und Derivaten, Chitosanen, Alginaten, Polyestern, Phenol-Formaldehyd-Harzen, Anhydrid-derivatisierten NR-, NBR- oder EPDM-Kautschuken, mindestens einem thermolabilen Vulkanisationsbeschleuniger (A) mit einem Schmelzpunkt unter 140 °C und gegebenenfalls mindestens einem Vernetzungsmittel, ausgewählt aus den Produkten mit zwei oder mehr Epoxygruppen, Carboxylgruppen, gegebenenfalls als Acylhalogenide oder als Ester aktiviert, Aldehydgruppen, Isocyanatgruppen, Hydroxylgruppen, Halogenen,
den Produkten der Formel (I)
Q(OR)₄ (I)
wobei Q Sn, Si, Pb, Ge, Ti oder Zr ist und R C1-C4-Alkyl ist,
den anorganischen Produkten von Zr, Ti und Sn,
den Borprodukten wie Borsäure und Salze davon,
den Aluminiumprodukten der Formel (II)
Al(NO₃)₃, Al₂(SO₄)₃ oder M Al(SO₄)₂ (II),
wobei M Kalium oder Natrium ist, in mindestens einem geeigneten organischen Lösungsmittel, das mit Wasser nicht mischbar ist (organische Phase), wobei das organische Lösungsmittel, das mit Wasser nicht mischbar ist, ausgewählt ist aus chlorierten Lösungsmitteln, aromatischen und aromatischen Halogenid-Lösungsmitteln, aliphatischen Kohlenwasserstoffen, Estern, Ethern und Mischungen davon,
- Bereitstellen einer wässrigen Phase,
- Bereitstellen mindestens eines nichtionischen Tensids, möglicherweise gelöst in der wässrigen Phase,
- Zusammenmischen der organischen Phase, der wässrigen Phase und des mindestens einen Tensids bis zum Bereitstellen einer Emulsion,
- Zugeben zu der Emulsion, falls nicht bereits vorhanden, des mindestens einen Vernetzungsmittels,
- Reagierenlassen der Emulsion, vorzugsweise unter Rühren, um nichtvernetzte Kapseln zu erzeugen,
- Isolieren der nicht-vernetzten Kapseln aus der Emulsion, und
- Unterwerfen der Kapseln einer Vernetzung durch Erhitzen.

7. Prozess nach Anspruch 6, wobei
- das mit Wasser nicht mischbare organische Lösungsmittel in einem Gewichtsverhältnis von 50:1 bis 0,5:1, vorzugsweise von 20:1 bis 0,7:1, mehr bevorzugt von 10:1 bis 1:1, noch mehr bevorzugt von 5:1 bis 1:1, bezogen auf das Gesamtgewicht des Beschleunigers (A) und des vernetzbaren Polymers, verwendet wird;
- das vernetzbare Polymer und der thermolabile Vulkanisationsbeschleuniger (A) in einem Gewichtsverhältnis zwischen 10:1 und 0,1:1, vorzugsweise zwischen 7:1 und 0,3:1, mehr bevorzugt zwischen 5:1 und 0,5:1, noch mehr bevorzugt um 1:1 vorliegen;
- das Vernetzungsmittel in einem Gewichtsprozentsatz zwischen 1 % und 15 %, vorzugsweise zwischen 5 % und 15 %, mehr bevorzugt zwischen 8 % und 12 %, noch mehr bevorzugt um 10 Gew.-% bezogen auf das vernetzbare Polymer vorhanden ist;
- das Tensid in einem Gewichtsprozentsatz zwischen 0,2 und 10 Gew.-%, vorzugsweise zwischen 0,5 und 5 Gew.-%, mehr bevorzugt zwischen 0,8 und 2 Gew.-% bezogen auf das Gewicht des Wassers vorhanden ist; und
- das Gewichtsverhältnis zwischen Wasser und nicht mit Wasser mischbarem organischem Lösungsmittel zwischen 10:1 und 0,1:1, mehr bevorzugt zwischen 5:1 und 0,5:1, noch mehr bevorzugt zwischen 4:1 und 2:1 liegt.

8. Prozess nach einem der Ansprüche 6 oder 7, wobei:
- das vernetzbare Polymer ein vernetzbares Cellulosederivat ist,
- das thermolabile Vulkanisationsbeschleunigungsmittel (A) ein Sulfenamid ist,
- das Vernetzungsmittel ein Di- oder Triepoxid ist.

9. Prozess nach einem der Ansprüche 6 bis 8, wobei das nichtionische Tensid ausgewählt ist aus Polyvinylalkoholen, ethoxylierten Sorbitanderivaten, Sorbitanestern, polyethoxylierten Rizinusölen, Alkylpolyethylenglykolen, Polyoxyethylenethern und Mischungen davon.

10. Prozess nach einem der Ansprüche 6 bis 9, wobei die Vernetzung der nicht-vernetzten Kapseln mittels ihrer Erwärmung von 70 °C bis 150 °C für einen Zeitraum von 5 bis 20 Stunden durchgeführt wird.

11. Kapsel, erhältlich nach dem Prozess nach einem der Ansprüche 6 bis 10.

12. Elastomere Zusammensetzung für Reifen, umfassend mindestens
0,1 bis 20 phr mindestens eines thermolabilen Vulkanisationsbeschleunigers (A) mit einem Schmelzpunkt unter 140 °C, verkapselt in einer Kapsel nach einem der Ansprüche 1 bis 5 oder 11,
100 phr mindestens eines Dien-Elastomerpolymers (B),
0 bis 120 phr mindestens eines verstärkenden Füllstoffs (C), und
0,1 bis 15 phr mindestens eines Vulkanisationsmittels (D).

13. Elastomere Zusammensetzung nach Anspruch 12, wobei
- das mindestens eine Dien-Elastomerpolymer (B) ausgewählt ist aus cis-1,4-Polyisopren, 3,4-Polyisopren, Polybutadien, gegebenenfalls halogenierten Isopren/Isobuten-Copolymeren, 1,3-Butadien/Acrylnitril-Copolymeren, Styrol/1,3-Butadien-Copolymeren, Styrol/Isopren/1,3-Butadien-Copolymeren, Styrol/1,3-Butadien/Acrylnitril-Copolymeren und Mischungen davon;
- der mindestens eine verstärkende Füllstoff (C), falls vorhanden, ausgewählt ist aus Ruß, herkömmlicher Kieselsäure, wie Kieselsäure aus Sand, gefällt mit starken Säuren, vorzugsweise amorph, Kieselgur, Calciumcarbonat, Titandioxid, Talkum, Tonerde, Aluminosilikaten, Kaolin, Silikatfasern und Mischungen davon; und
- das mindestens eine Vulkanisationsmittel (D) ausgewählt ist aus Schwefel oder schwefelhaltigen Molekülen (Schwefeldonoren) wie Caprolactamdisulfid (CLD), Bis[(trialkoxysilyl)propyl]polysulfiden, Dithiophosphaten, Phosphorylpolysulfid (SDT) und Mischungen davon, vorzugsweise ist es Schwefel.

14. Vulkanisierbare Elastomerverbindung für Reifen, erhalten durch Mischen und gegebenenfalls Erwärmen der Komponenten der Elastomerzusammensetzung für Reifen nach einem der Ansprüche 12 oder 13 oder eine vulkanisierte Elastomerverbindung, erhalten durch Vulkanisation derselben.

15. Verbindung nach Anspruch 14, **gekennzeichnet durch** eine Vulkanisationszeit von weniger als 20 Minuten, gemessen nach ISO6502 bei 151 °C.

16. Prozess zur Herstellung einer vulkanisierbaren Elastomerverbindung für Reifen nach Anspruch 14 oder 15, wobei der Prozess einen oder mehrere Schritte des Mischens von mindestens einem thermolabilen Vulkanisationsbeschleuniger (A) mit einem Schmelzpunkt unter 140 °C, der in einer Kapsel nach einem der Ansprüche 1 bis 5 oder 11 eingekapselt ist, mindestens einem Dien-elastomeren Polymer (B), mindestens einem verstärkenden Füllstoff (C) und mindestens einem Vulkanisationsmittel (D) umfasst.

17. Prozess nach Anspruch 16, wobei nach der Zugabe des mindestens einen thermolabilen Vulkanisationsbeschleunigers (A) die Temperatur der gemischten Mischung 140 °C nicht überschreitet, vorzugsweise 120 °C nicht überschreitet.

18. Prozess nach einem der Ansprüche 16 oder 17, umfassend
- einen Mischungsschritt (1) umfassend das Mischen und gegebenenfalls Erhitzen auf eine Mischungstemperatur zwischen 120 °C und 160 °C, in mindestens einem geeigneten Mischer:
- mindestens ein Elastomerpolymer (B),
- mindestens einen verstärkenden Füllstoff (C), und
gegebenenfalls mindestens einen thermolabilen Vulkanisationsbeschleuniger (A), der in einer Kapsel nach einem der Ansprüche 1 bis 5 oder 11 eingekapselt ist, wobei in diesem Fall die Temperatur unter 140 °C gehalten wird,
um eine nicht vulkanisierbare Elastomerverbindung (m1) zu erhalten;
- einen Mischungsschritt (2) umfassend das Einarbeiten in die nichtvulkanisierbare Elastomerverbindung (m1):
mindestens ein Vulkanisationsmittel (D),
mindestens einen thermolabilen Vulkanisationsbeschleuniger (A), der in einer Kapsel nach einem der Ansprüche 1 bis 5 oder 11 eingekapselt ist, falls nicht bereits vollständig in Schritt (1) zugegeben, und
gegebenenfalls Vulkanisationsbeschleuniger und/oder Hemmstoffmittel,
und Mischen bei einer Mischungstemperatur von nicht höher als 120 °C, vorzugsweise nicht höher als 105 °C, um eine vulkanisierbare Elastomerverbindung (m2) zu erhalten; und
- einen Schritt des Entladens (3) der vulkanisierbaren Elastomerverbindung (m2).

19. Reifenkomponente, die die vulkanisierbare Verbindung nach einem der Ansprüche 14 oder 15 oder die durch Vulkanisation davon erhaltene vulkanisierte Verbindung umfasst.

20. Reifen für Fahrzeugräder, umfassend mindestens eine Reifenkomponente nach Anspruch 19.

21. Verwendung der Kapsel nach einem der Ansprüche 1 bis 5 oder 11 als Beschleuniger der Vulkanisation von Elastomerverbindungen für Reifen.

## Revendications

1. Capsule comprenant un revêtement et un noyau, dans laquelle
le revêtement comprend au moins un polymère réticulé obtenu par réticulation d'au moins un polymère réticulable choisi parmi dérivés de cellulose, amidon et dérivés, chitosanes, alginates, polyesters, résines phénol-formaldéhyde, caoutchoucs NR, NBR ou EPDM dérivés avec des anhydrides, avec au moins un agent de réticulation choisi parmi
les produits ayant deux groupes époxy, groupes carboxyliques, facultativement activés en tant qu'halogénures d'acyle ou en tant qu'esters, groupes aldéhyde, groupes isocyanate, groupes hydroxyle, halogènes, ou plus, les produits de formule (I)
Q(OR)₄ (I)
où Q est Sn, Si, Pb, Ge, Ti or Zr, et R est alkyle en C1-C4,
les produits inorganiques de Zr, Ti et Sn,
les produits de bore tels que l'acide borique et sels de celui-ci,
les produits d'aluminium de formule (II)
Al(NO₃)₃, Al₂(SO₄)₃ ou M Al(SO₄)₂ (II)
dans laquelle M est potassium ou sodium et dans laquelle le noyau comprend au moins un accélérateur de vulcanisation thermolabile (A) ayant un point de fusion inférieur à 140 °C.

2. Capsule selon la revendication 1, dans laquelle ledit au moins un polymère réticulable est un dérivé de cellulose choisi parmi éthylcellulose, acétate de cellulose, 2-hydroxyéthylcellulose, acétate-butyrate de cellulose, phtalate-acétate de cellulose, cyanoéthylate de cellulose, méthylcellulose, hydroxypropylcellulose, carboxyméthylcellulose sodique, hydroxypropylméthylcellulose et méthyl-2-hydroxyéthylcellulose.

3. Capsule selon l'une quelconque des revendications précédentes, dans laquelle ledit au moins un accélérateur de vulcanisation thermolabile (A) est choisi parmi xanthates, dithiocarbamates, thiurames, dérivés de thiazol, sulphénamides, guanidines et dérivés de thiourée, de préférence parmi les sulphénamides.

4. Capsule selon l'une quelconque des revendications précédentes, dans laquelle ledit au moins un accélérateur de vulcanisation thermolabile (A) est choisi parmi monosulfure de tétraméthylthiurame (TMTM), disulfure de tétraméthylthiurame, morpholide de benzothiazyl-2-sulfène (MBS), benzothiazyl-2-cyclohexyl-sulfénamide (CBS), benzothiazyl-2-tert-butyl-sulfénamide (TBBS), benzothiazyldicyclohexylsulphénamide (DCBS), diphénylguanidine (DPG), diorthotolyl guanidine (DOTG), o-tolylbiguanide (OTBG), zinc-N-diméthyl-dithiocarbamate (ZDMC), zinc-N-diéthyldithiocarbamate (ZDEC), zinc-N-dibutyl-dithiocarbamate (ZDBC), zinc-N-éthylphényldithiocarbamate (ZEBC), N-pentaméthylène-dithiocarbamate de zinc (ZPMC), éthylènethiourée (ETU), diéthylthiourée (DETU), diphénylthiourée (DPTU), de préférence il s'agit du TBBS.

5. Capsule selon l'une quelconque des revendications précédentes, qui comprend 10 % à 80 % en poids de l'au moins un accélérateur de vulcanisation thermolabile (A) et 90 % à 20 % en poids de revêtement, par rapport au poids total de la capsule.

6. Procédé en émulsion permettant de préparer les capsules selon l'une quelconque des revendications 1 à 5 qui comprend
- la fourniture d'une solution d'au moins un polymère réticulable, choisi parmi dérivés de cellulose, amidon et dérivés, chitosanes, alginates, polyesters, résines phénol-formaldéhyde, caoutchoucs NR, NBR ou EPDM dérivés avec des anhydrides, au moins un accélérateur de vulcanisation thermolabile (A) ayant un point de fusion inférieur à 140 °C et, facultativement, au moins un agent de réticulation, choisi parmi les produits ayant deux groupes époxy, groupes carboxyliques, facultativement activés en tant qu'halogénures d'acyle ou en tant qu'esters, groupes aldéhydes, groupes isocyanates, groupes hydroxyle, halogènes, ou plus,
les produits de formule (I)
Q(OR)₄ (I)
où Q est Sn, Si, Pb, Ge, Ti or Zr, et R est alkyle en C1-C4,
les produits inorganiques de Zr, Ti et Sn,
les produits de bore tels que l'acide borique et sels de celui-ci,
les produits d'aluminium de formule (II)
Al(NO₃)₃, Al₂(SO₄)₃ ou M Al(SO₄)₂ (II)
dans laquelle M est potassium ou sodium, dans au moins un solvant organique non miscible avec l'eau (phase organique), dans lequel ledit solvant organique non miscible avec l'eau est choisi parmi solvants chlorés, solvants halogénures aromatiques et aromatiques, hydrocarbures aliphatiques, esters, éthers et mélanges de ceux-ci,
- la fourniture d'une phase aqueuse,
- la fourniture d'au moins un agent tensioactif non ionique, éventuellement dissous dans ladite phase aqueuse,
- le mélange ensemble de ladite phase organique, de ladite phase aqueuse et dudit au moins un agent tensioactif jusqu'à obtenir une émulsion,
- l'ajout à l'émulsion, s'il n'est pas déjà présent, de l'au moins un agent de réticulation,
- le fait de laisser réagir l'émulsion, de préférence sous agitation, afin de produire des capsules non réticulées,
- l'isolement des capsules non réticulées de l'émulsion, et
- le fait de soumettre les capsules à une réticulation par chauffage.

7. Procédé selon la revendication 6, dans lequel
- ledit solvant organique non miscible à l'eau est utilisé dans un rapport en poids allant de 50:1 à 0,5:1, de préférence de 20:1 à 0,7:1, plus préférablement de 10:1 à 1:1, encore plus préférablement de 5:1 à 1:1, par rapport au poids total de l'accélérateur (A) et du polymère réticulable ;
- ledit polymère réticulable et ledit accélérateur de vulcanisation thermolabile (A) sont présents dans un rapport en poids compris entre 10:1 et 0,1:1, de préférence entre 7:1 et 0,3:1, plus préférablement entre 5:1 et 0,5:1, encore plus préférablement d'environ 1:1 ;
- ledit agent de réticulation est présent en un pourcentage en poids compris entre 1 % et 15 %, de préférence entre 5 % et 15 %, plus préférablement entre 8 % et 12 %, encore plus préférablement d'environ 10 % en poids par rapport au polymère réticulable ;
- ledit agent tensioactif est présent en un pourcentage en poids compris entre 0,2 % et 10 % en poids, de préférence entre 0,5 % et 5 % en poids, plus préférablement entre 0,8 % et 2 % en poids par rapport au poids d'eau ; et
- le rapport en poids entre l'eau et le solvant organique non miscible avec l'eau est compris entre 10:1 et 0,1:1, plus préférablement entre 5:1 et 0,5:1, encore plus préférablement entre 4:1 et 2:1.

8. Procédé selon l'une quelconque des revendications 6 ou 7, dans lequel :
- le polymère réticulable est un dérivé de cellulose réticulable,
- l'accélérateur de vulcanisation thermolabile (A) est un sulphénamide,
- l'agent de réticulation est un di- ou triépoxyde.

9. Procédé selon l'une quelconque des revendications 6 à 8, dans lequel l'agent tensioactif non ionique est choisi parmi alcools polyvinyliques, dérivés de sorbitane éthoxylés, esters de sorbitane, huiles de ricin polyéthoxylées, alkylpolyéthylèneglycols, éthers de polyoxyéthylène et mélanges de ceux-ci.

10. Procédé selon l'une quelconque des revendications 6 à 9, dans lequel la réticulation des capsules non réticulées est effectuée au moyen de leur chauffage de 70 °C à 150 °C, pendant une période de 5 à 20 heures.

11. Capsule pouvant être obtenue selon le procédé selon l'une quelconque des revendications 6 à 10.

12. Composition élastomère pour pneumatiques comprenant au moins
0,1 à 20 pce d'au moins un accélérateur de vulcanisation thermolabile (A) ayant un point de fusion inférieur à 140 °C, encapsulé dans une capsule selon l'une quelconque des revendications 1 à 5 ou 11,
100 pce d'au moins un polymère élastomère diène (B),
0 à 120 pce d'au moins une charge de renforcement (C), et
0,1 à 15 pce d'au moins un agent de vulcanisation (D).

13. Composition élastomère selon la revendication 12, dans laquelle
- l'au moins un polymère élastomère diène (B) est choisi parmi cis-1,4-polyisoprène, 3,4-polyisoprène, polybutadiène, copolymères isoprène/isobutène facultativement halogénés, copolymères 1,3-butadiène/acrylonitrile, copolymères styrène/1,3-butadiène, copolymères styrène/isoprène/1,3-butadiène, copolymères styrène/1,3-butadiène/acrylonitrile et mélanges de ceux-ci ;
- l'au moins une charge de renforcement (C), si elle est présente, est choisie parmi noir de carbone, silice classique, telle que silice provenant de sable précipité avec des acides forts, de préférence amorphe, terre de diatomées, carbonate de calcium, dioxyde de titane, talc, alumine, aluminosilicates, kaolin, fibres de silicate et mélanges de ceux-ci ; et
- l'au moins un agent de vulcanisation (D) est choisi parmi soufre ou molécules contenant du soufre (donneurs de soufre) telles que disulfure de caprolactame (CLD), bis[(trialcoxysilyl)propyl]polysulfures, dithiophosphates, polysulfure de phosphoryle (SDT) et mélanges de ceux-ci, de préférence il s'agit du soufre.

14. Composé élastomère vulcanisable pour pneumatiques, obtenu par mélange et chauffage éventuel des composants de la composition élastomère pour pneumatiques selon l'une des revendications 12 ou 13 ou composé élastomère vulcanisé obtenu par la vulcanisation de celui-ci.

15. Composé selon la revendication 14, **caractérisé par** un temps de vulcanisation inférieur à 20 minutes, mesuré selon la norme ISO6502 à 151 °C.

16. Procédé permettant de préparer un composé élastomère vulcanisable pour pneumatiques selon les revendications 14 ou 15, ledit procédé comprenant une ou plusieurs étapes consistant à mélanger au moins un accélérateur de vulcanisation thermolabile (A) ayant un point de fusion inférieur à 140 °C encapsulé dans une capsule selon l'une quelconque des revendications 1 à 5 ou 11, au moins un polymère élastomère diène (B), au moins une charge de renforcement (C) et au moins un agent de vulcanisation (D).

17. Procédé selon la revendication 16, dans lequel, après l'ajout dudit au moins un accélérateur de vulcanisation thermolabile (A), la température du composé en cours de mélange ne dépasse pas 140 °C, de préférence elle ne dépasse pas 120 °C.

18. Procédé selon l'une des revendications 16 ou 17, qui comprend
- une étape de mélange (1) qui comprend le mélange et l'éventuel chauffage à une température de mélange comprise entre 120 °C et 160 °C, dans au moins un mélangeur approprié, de :
- au moins un polymère élastomère (B),
- au moins une charge de renforcement (C), et
facultativement, au moins un accélérateur de vulcanisation thermolabile (A) encapsulé dans une capsule selon l'une quelconque des revendications 1 à 5 ou 11, dans ce cas en maintenant la température inférieure à 140 °C,
pour obtenir un composé élastomère non vulcanisable (m1) ;
- une étape de mélange (2) qui comprend l'incorporation dans le composé élastomère non vulcanisable (m1) de :
au moins un agent de vulcanisation (D),
au moins ledit accélérateur de vulcanisation thermolabile (A) encapsulé dans une capsule selon l'une quelconque des revendications 1 à 5 ou 11, s'il n'est pas déjà complètement ajouté à l'étape (1), et
facultativement, des agents accélérateurs et/ou retardateurs de vulcanisation,
et le mélange à une température de mélange non supérieure à 120 °C, de préférence non supérieure à 105 °C, pour obtenir un composé élastomère vulcanisable (m2) ; et
- une étape de déchargement (3) du composé élastomère vulcanisable (m2).

19. Composant de pneumatique comprenant le composé vulcanisable selon l'une des revendications 14 ou 15, ou le composé vulcanisé obtenu par vulcanisation de celui-ci.

20. Pneumatique pour roues de véhicule comprenant au moins un composant de pneumatique selon la revendication 19.

21. Utilisation de la capsule selon l'une quelconque des revendications 1 à 5 ou 11, comme accélérateur de la vulcanisation de composés élastomères pour pneumatiques.
